# EUROPEAN PATENT SPECIFICATION

(11) **EP 2 648 114 B1**
(45) Date of publication and mention of the grant of the patent: **13.12.2017**
(21) Application number: 11845808.2
(22) Date of filing: 07.09.2011
(51) Int. Cl.: G06F 17/30

(54) **METHOD, SYSTEM, TOKEN CONREOLLER AND MEMORY DATABASE FOR IMPLEMENTING DISTRIBUTE-TYPE MAIN MEMORY DATABASE SYSTEM**
VERFAHREN, SYSTEM, TOKEN-STEUERUNG UND SPEICHERDATENBANK ZUR IMPLEMENTIERUNG EINES DATENBANKSYSTEMS MIT EINEM VERTEILTEN HAUPTSPEICHER
PROCÉDÉ, SYSTÈME, CONTRÔLEUR DE JETON ET BASE DE DONNÉES DE MÉMOIRE POUR LA MISE EN UVRE D'UN SYSTÈME DE BASE DE DONNÉES DE MÉMOIRE PRINCIPALE DE TYPE DISTRIBUTION

(30) Priority: 02.12.2010 CN 201010570252
(43) Date of publication of application: 09.10.2013
(73) Proprietor: Huawei Technologies Co., Ltd., Longgang District Shenzhen, Guangdong 518129 (CN)
(72) Inventor: ZHA, Feng, Shenzhen Guangdong 518129 (CN); HE, Qin, Shenzhen Guangdong 518129 (CN)
(74) Representative: Epping - Hermann - Fischer
(86) International application number: PCT/CN2011/079418
(87) International publication number: WO 2012/071920

(56) References cited:
- CN-A- 101 118 509
- CN-A- 101 493 826
- CN-A- 101 751 394
- CN-A- 101 887 388
- CN-A- 102 142 008
- US-A1- 2010 257 137
- US-B1- 7 805 407
- US-B2- 7 260 625
- US-B2- 7 281 154
- Sudipto Das ET AL: "Live Database Migration for Elasticity in a Multitenant Database for Cloud Platforms", UCSB Computer Science Technical Report 2010-09, 1 January 2010 (2010-01-01), pages 1-14, XP055030999, Retrieved from the Internet: URL:http://www.cs.ucsb.edu/research/tech_r eports/reports/2010-09.pdf [retrieved on 2012-06-25]
- Microsoft Corporation: "Server Clusters : Architecture Overview For Windows Server 2003", , 1 January 2003 (2003-01-01), pages 1-3, XP55009995, USA Retrieved from the Internet: URL:http://download.microsoft.com/download /0/a/4/0a4db63c-0488-46e3-8add-28a3c064885 5/ServerClustersArchitecture.doc [retrieved on 2011-10-19]

## Description

### TECHNICAL FIELD

The present disclosure relates to communication technology, and in particular, to method and system of distributed memory database, token controller and memory database.

### BACKGROUND

US 2010/257137 A1 relates to a database system with multiple layer distribution, and specifically recites a database system with a master database and a plurality of slave databases to act as memory caches, each slave database connected with a number of applications allowed to request execution of an operation to the database system, and a method of handling subscriber data in the database system. Each slave database may include a configuration unit for configuring data clusters at the slave database. Where the data cluster is modified as a result of executing the operation at the slave database, the step of executing the operation with the received data cluster may include a step of updating the master database with the modified data cluster. The master database includes a configuration unit for configuring data clusters, each data cluster identifying a number of subscriber data associated with an operation and assigned a priority per slave database, application, or combinations thereof. The processing unit of the master database in cooperation with the configuration unit may be arranged for dynamically updating the priority assigned to the data cluster.

Sudipto Das ET AL: "Live Database Migration for Elasticity in a Multitenant Database for Cloud Platforms", UCSB Computer Science Technical Report 2010-09, 1 January 2010, pages 1-14, focuses on the problem of live database migration in a multitenant cloud database management system (DBMS). DBMSs often collocate multiple tenants' database on a single server for effective resource sharing. Due to the variability in load, elastic load balancing of tenants' data is critical for performance and cost minimization. On demand migration of tenants' databases to distribute load on an elastic cluster of machines is a critical technology for elastic load balancing. Therefore, efficient live database migration techniques with minimal disruption and impact in service are paramount in such systems. This paper solves the problem by evaluating different database multitenancy models in the context of migration and proposing an efficient technique for live migration of a tenant's database with minimal downtime and impact on performance.

Main Memory Database (MMDB) is a type of database technology, which is mainly used to put data into a memory, and thereby the database storing the data in the memory can be read directly. Comparing with accessing data stored on a disk and accessing data stored on a memory, since it does not need to access the disk when processing data, the read and write speed can be largely improved, and thereby MMDB is used in various technical field. In the prior art, the following solutions are used to deploy distributed MMDB.

According Active-Standby dual machine solution, i.e. two token controllers are deployed on two devices, the active token of one device works, while the standby token controller of the other device is idle, and both of the devices are installed with dual machine control software, and the two token controllers exhibit a floating IP to the outside. For respective MMDBs within a cluster in a distributed memory database, there is only one token controller, and IP of one token controller is required, which keeps heartbeat with the token controller. If the active token controller breaks down, the standby token can replace the active token controller through the switch function of dual machine control software, and still presents to MMDB in floating IP. In this way, for MMDB, there is only one token controller within the cluster, the switch between the active token and standby token cannot be felt.

However, the method has its drawbacks. When the active token controller breaks down, if the switch is performed manually, then there will be a risk of delaying, while automatic detection causes the heartbeat of the token controller to be detected at a third point outside of the two token controllers to determine its state, and the third point still has a risk of failure. Furthermore, this deployment is complicated, and its reliability and stability are poor.

### SUMMARY

The present disclosure provides methods for implementing a distributed MMDB, and a system, and the present disclosure can improve the reliability of the distributed MMDB.

To achieve the above purpose, the present disclosure uses the following technical solutions:
A method for implementing a distributed MMDB, comprising the following steps executed by a memory database within a cluster:
periodically transmitting a message comprising node MMDB information to at least two token controller which are responsible for managing the cluster, the node memory database information comprising one or more of name of a local memory database, Internet IP address, port and database priority;
periodically receiving a message comprising MMDB list from respectively the at least two token controllers, wherein the MMDB list comprises information within the cluster arranged according to at least one of the node MMDB information, the information within the cluster comprising one or more of the node memory database information of each memory database that constitutes the cluster, master-slave mode information of each memory database that constitutes the cluster, and controller priority of a token controller that transmits the memory database list;
processing transactions within the cluster according to the information within the cluster in the MMDB list;
wherein the processing transactions within the cluster according to the information within the cluster in the memory database list comprises processing transactions within the cluster based on the information within the cluster in the memory database list from a master token controller when the message comprising the memory database list is received from the master token controller of the at least two token controllers, wherein when the memory database is a master memory database, and the situation within the cluster is that one token controller of the at least two token controllers breaks down, the step of processing transactions within the cluster according to the information within the cluster in the memory database list further comprises: determining controller priority of the breakdown token controller according to the information within the cluster in the memory database list; if the controller priority of the breakdown token controller is the highest controller priority, then selecting a token controller currently having the highest controller priority to be a master token controller from other token controller other than the breakdown token controller according to the information within the cluster. When the memory database is the master memory database, and when the token controller recovered from breakdown rejoins the cluster, the step of processing transactions within the cluster according to the information within the cluster in the memory database list comprises: after the message comprising the memory database list from the token controller recovered from breakdown is received, determining the controller priority of the token controller recovered from breakdown according to the information within the cluster in the memory database list; if the controller priority of the token controller recovered from breakdown is higher than the controller priority of the current master token controller, then determining availability of the memory database list of the token controller recovered from breakdown according to the memory database list from the current master token controller; if it is determined that the memory database list of the token controller recovered from breakdown has availability, then selecting the token controller recovered from breakdown to be a new master token controller.

A method for implementing a distributed MMDB, comprising the following steps executed by a token controller which is responsible for managing a cluster:
periodically receiving a message comprising node memory data information as defined above from at least one MMDB within the cluster;
acquiring a MMDB list according to the node MMDB information, wherein the MMDB list comprises the information within the cluster as defined above arranged according to at least one of the node MMDB information;
periodically transmitting the message comprising the MMDB list to the at least one MMDB, such that the at least one MMDB process the transactions within the cluster according the information within the cluster in the MMDB list;
   wherein processes a transaction within the cluster according the information within the cluster in the memory database list comprises:
      processing transactions within the cluster is based on the information within the cluster in the memory database list from a master token controller of at least two token controllers when the received message comprising the memory database list is from the master token controller; and
when the situation within the cluster is that one token controller of the at least two token controllers breaks down, determining controller priority of the breakdown token controller according to the information within the cluster in the memory database list, if the controller priority of the breakdown token controller is the highest controller priority , then selecting a token controller currently having the highest controller priority to be a master token controller from the at least two token controllers other than the breakdown token controller according to the information within the cluster. When the situation within the cluster is to deal with a situation that the token controller recovered from breakdown rejoins the cluster, after the message comprising the memory database list from the token controller recovered from breakdown is received, determining the controller priority of the token controller recovered from breakdown according to the information within the cluster in the memory database list; if the controller priority of the token controller recovered from breakdown is higher than the controller priority of the current master token controller, then determining availability of the memory database list of the token controller recovered from breakdown according to the memory database list from the current master token controller; if it is determined that the memory database list of the token controller recovered from breakdown has availability, then selecting the token controller recovered from breakdown to be a new master token controller.

A distributed memory database system, comprising:
at least two token controllers; and at least one MMDB, the MMDB comprising:
   a transmitting module, configured to periodically transmit a message comprising node MMDB information as defined above to the at least two token controller;
   a receiving module, configured to periodically receiving a message comprising MMDB list respectively from the at least two token controllers, wherein the MMDB list comprises information within a cluster as defined above arranged according to at least one of the node MMDB information;
   a processing module, configured to process transactions within the cluster according to the information within the cluster in the MMDB list, wherein processing transactions within the cluster is based on the information within the cluster in the memory database list from a master token controller when the message comprising the memory database list is received from the master token controller of the at least two token controllers;
   wherein the processing module comprises: a breakdown determination unit, configured to determine controller priority of a breakdown token controller according to the information within the cluster in the memory database list when a token controller breaks down; a first selection unit, configured to select a token controller currently having the highest controller priority to be a master token controller from token controllers other than the breakdown token controller according to the information within the cluster when the breakdown determination unit determines that the controller priority of the breakdown token controller is the highest controller priority; a recovery determination unit, configured to determine controller priority of a token controller recovered from breakdown according to the information within the cluster in the memory database list received by the receiving module from the token controller recovered from breakdown when the token controller recovered from breakdown rejoins the cluster; an availability determination unit, configured to determine availability of the memory database list of the token controller recovered from breakdown according to the memory database list from the current token controller when the recovery determination unit determines that the controller priority of the token controller recovered from breakdown is higher than the controller priority of the current master token controller; a second selection unit, configured to select the token controller recovered from breakdown to be a new master token controller when the availability determination unit determines that the memory database list of the token controller recovered from breakdown has availability.

A site system, comprising: a first site and a second site, wherein
a token controller in the first site is configured to receive a message comprising master MMDB information of the second site from a token controller of the second site, and acquire the MMDB list of the first site according to the master MMDB information of the second site and the information within the cluster of the first site, and transmit the MMDB list of the first site to the MMDB of the first site;
the MMDB in the first site is configured to transmit a message comprising node MMDB information to the token controller of the first site, and acquire the MMDB list of the first site from the token controller of the first site, and process transactions within the first site or between the first site and second site according to the MMDB list;
wherein the MMDB list comprises: the master MMDB information of the second site that joins the first site as a slave MMDB, and the information within the cluster of the first site arranged according to the node MMDB information.

In the above solutions of the present disclosure, no dual machine control software is required to control the MMDB, and no Active-Standby dual machine solution is required, each MMDB can acquire the MMDB list through interactions with token controllers, and process transactions within the cluster according to the MMDB list, and thereby the delay caused manual switch is reduced, and the execution complexity is reduced, there is not need to provide idle standby device, and thus the cost is reduced, and the reliability of the distributed MMDB is improved.

### BRIEF DESCRIPTION OF THE DRAWINGS

In order to describe the technical solutions of the present disclosure and the prior art clearly, the figures necessary for describing the embodiments and the prior art will simply be described in the following description. It is clear that the following figures are merely some embodiments of the present disclosure, for persons skilled in the art, other figures may also be obtained according to these figures without inventive work.
Fig. 1 is a flow showing a method for implementing a distributed MMDB according to the present disclosure;
Fig. 2 is a flow showing scenarios when a MMDB joins or keeps heartbeat with or exits from a MMDB cluster according to the present disclosure;
Fig. 3 is a flow showing a method for implementing a distributed MMDB when a MMDB joins a MMDB cluster according to the present disclosure;
Fig. 4 is a flow showing a method for implementing a distributed MMDB when a MMDB keeps heartbeat according to the present disclosure;
Fig. 5 is a flow showing scenario when a token controller breaks down according to the present disclosure;
Fig. 6 is a flow showing a method for implementing a distributed MMDB when a token controller breaks down according to the present disclosure;
Fig. 7 is a flow showing a method for implementing a distributed MMDB when a token controller rejoins a cluster according to the present disclosure;
Fig. 8 is a flow showing a method for implementing a distributed MMDB when a write operation is received according to the present disclosure;
Fig. 9 is a flow showing a method for implementing a distributed MMDB when a MMDB breaks down according to the present disclosure;
Fig 10 is a flow showing a method for implementing a distributed MMDB when a MMDB recovered from breakdown according to the present disclosure;
Fig. 11 is a structure diagram of a MMDB provided by an embodiment of the present disclosure;
Fig. 12 is a structure diagram of a MMDB provided by another embodiment of the present disclosure;
Fig. 13 is a structure diagram of a token controller provided by an embodiment of the present disclosure;
Fig. 14 is a flow showing a method for implementing a distributed MMDB according to the present disclosure;
Fig. 15 is a flow showing a method for implementing a distributed MMDB between sites when a write request is received according to the present disclosure;
Fig. 16 is a diagram showing interactions between token controllers of different sites in the method provided by the present disclosure;
Fig. 17 a diagram showing data synchronization between sites when a write request is received according to the present disclosure;
Fig. 18 is a flow showing a method for implementing a distributed MMDB between sites when the master MMDB changes according to the present disclosure.
Fig. 19 is a diagram showing a site system provided by the embodiments of the present disclosure.

### DETAILED DESCRIPTION

The technical solution of the present disclosure will be described in detail in connection with the accompanying drawings. It should be appreciated that the described embodiments merely serve as a part of the embodiments of the present disclosure, instead of all of the embodiments. Based on the embodiments of the present disclosure, all of the other embodiments obtained by persons skilled in the art without inventive work are intended to be within the scope of the present disclosure.

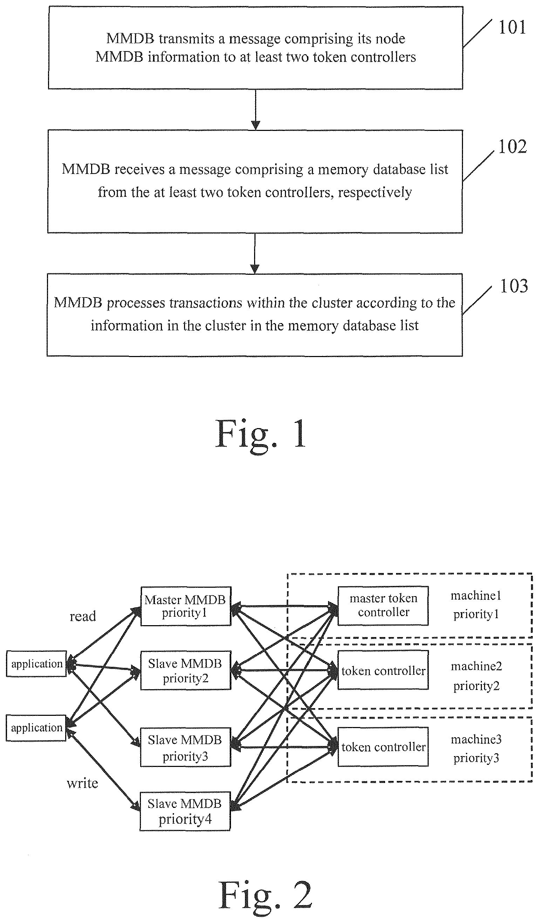

As illustrated in Fig. 1, the embodiment provides a method for implementing distributed MMDB, the method mainly relates to MMDB and the token controller for managing the MMDB, and the method comprises:
Step 101: MMDB transmit a message comprising its node MMDB information to at least two token controllers;
   In the present embodiment and the following embodiments, the above node MMDB message comprises at least: the name of the local MMDB, IP address, port and database priority and etc.

For example, MMDB1 of a cluster 1 will transmit a message comprising its node MMDB information to the token controller 1 and token controller 2 that manage the cluster 1, wherein the node MMDB information includes: MMDB name of MMDB1, IP address, port, and the priority of MMDB1 .

In one cluster, the main MMDB generally requires the highest device performance. In order to enable the device with the highest performance to work as the main MMDB, and thus the present embodiment further includes: each MMDB that constitutes the cluster is configured with a database priority, and the database priority is used to indicate an order to work as the main MMDB. Therefore, the database priority of the above MMDB1 is used to indicate a priority that the MMDB1 in cluster 1 works as the main MMDB.

Generally, a cluster may include a plurality of MMDB, and thus if there are MMDB2 and MMDB3...in the cluster 1, then the way of execution will be similar to the above MMDB1, and which will not be described in detail here.

Step 102: MMDB receives a message comprising a memory database list from at least two token controllers, respectively, wherein the memory database list comprises information in the cluster sorted out according to at least one node memory database information;
In the present embodiment and the following embodiments, the information in the cluster comprises at least: the node MMDB information of each MMDB that constitutes the cluster, the master-slave mode information of each MMDB that constitutes the cluster, and the controller priority of the token controller that transmits MMDB column.

For example, after receiving the node MMDB information of the MMDB1 in the cluster 1 and the node MMDB information of other MMDB(s), the token controller 1 sorted out the MMDB list according to the node MMDB information of MMDB1 and the node MMDB information of other MMDS(s), the MMDB list comprises: the node MMDB information of each MMDB in the cluster 1, the master-slave mode information of each MMDB, and the controller priority of the controller. For the same reason, the token controller 2 is the same.

In a specific embodiment, the token controller transmits a message comprising the MMDB list to each MMDB of the cluster 1, such as MMDB 1. The token controller also transmits a message comprising the MMDB list to each MMDB of the cluster 1, such as MMDB 1, such that MMDB 1 and etc. process transactions within the cluster according to the information in the cluster in the MMDB list.

Step 103: MMDB processes transactions within the cluster according to the information in the cluster in the memory database list.

In the present embodiment and the following embodiments, the transactions within the cluster comprise at least: entering or existing the cluster via MMDB, MMDB breakdown within the cluster, the breakdown of recovering the breakdown MMDB, the breakdown of the token controller that manages the cluster, the breakdown of recovering the breakdown token controller, there is a write operation request requesting for writing data information in MMDB and etc.

When the token controller that manages the cluster is breakdown, in order to guarantee that other token controllers may take over the work of the breakdown token controller without idle device and other complicated dual machine software, and thus the method provided by the present embodiment further includes: each token controller that manages the cluster is configured with controller priority, and the controller priority is used to indicate an order to work as the main token controller. Therefore, the above token controller is configured with controller priority, and the controller priority is used to indicate a priority that the token controller 1 in the cluster 1 works as the main token controller, and the token controller corresponds to the token controller, and non-operate slave token controller corresponds to the slave controller. For the same reason, the token controller 2 is the same.

Since MMDB will receives MMDB lists transmitted from a plurality of token controllers, in order to reduce the difficulty of the method, in the method of the present embodiment, the method includes: when the received messages comprising the MMDB lists are from master token controllers of at least two token controllers, processing transactions within the cluster according to the information in the cluster in the MMDB list includes:
Transactions within the cluster are processed according to the information in the cluster in the MMDB list from the master token controller. That is, transactions within the cluster are processed according to the MMDB list transmitted from the master token controller, and while MMDB lists transmitted from other slave token controller are reserved in case of that the master token controller is breakdown.

For example, MMDB1 receives a message comprising a MMDB list transmitted from the token controller 1, the MMDB list comprises information within the cluster arranged according to the node MMDB information of MMDB1 and other MMDBs in the cluster 1, examples of the information within the cluster are: the node MMDB information of each MMDB in the cluster, master-salve mode information of each MMDB, and the controller priority of the token controller. Similarly, MMDB receives a message comprising a MMDB list transmitted from the token controller 2, the MMDB list comprises information within the cluster arranged according to the node MMDB information of MMDB1 and other MMDBs in the cluster 1, examples of the information within the cluster are: the node MMDB information of each MMDB in the cluster, master-salve mode information of each MMDB, and the controller priority of the token controller. Let the controller priority of the token controller 1 is the highest, and is the master token controller, and thus MMDB 1 will base on the MMDB list of the token controller 1, while the MMDB list of the salve token controller (i.e. token controller 2) will be reserved.

It should be pointed out that in the present embodiment, the device where the non-operate token controller locates is not idle. That is, even the token controller working as a non-operate token controller is not idle, waits for the master token controller to breakdown, and takes over its work, and thus the non-operate token controller is a device that works normally (i.e. heat machine). Therefore, it does not need to buy multiple devices, and dual machine control software is also not required.

In the method provided by the present embodiment, by obtaining the MMDB list through interactions with the token controller, and processing cluster transactions such as device breakdown or write operation request, the technical problems of cold machine backup, complex procedure, easy to breakdown and poor reliability occurred in the prior art when using dual machine software to handle breakdown can be solved, and thereby the technical effects of heat machine backup, without requirement of dual machine software, difficult to breakdown and good reliability can be achieved.

The present embodiment provides a method for implementing distributed MMDB, in the method, there is a distributed MMDB cluster, the cluster comprises at least two MMDBs, and the token controllers that manage at least two of the MMDBs in the cluster, the MMDBs and the token controllers can be deployed on the same device, or deployed on the different device, wherein extending protocols between respective MMDBs and the token controllers includes:
each token controller is configured with a name (the name is unique in the cluster), and configured with controller priority which is unique in the cluster, and configured with address information of each MMDB in the cluster; each MMDB is configured with a name (the name is unique in the cluster), and configured with a database priority which is unique in the cluster, and configured with the address information of each token controller that manages the cluster.

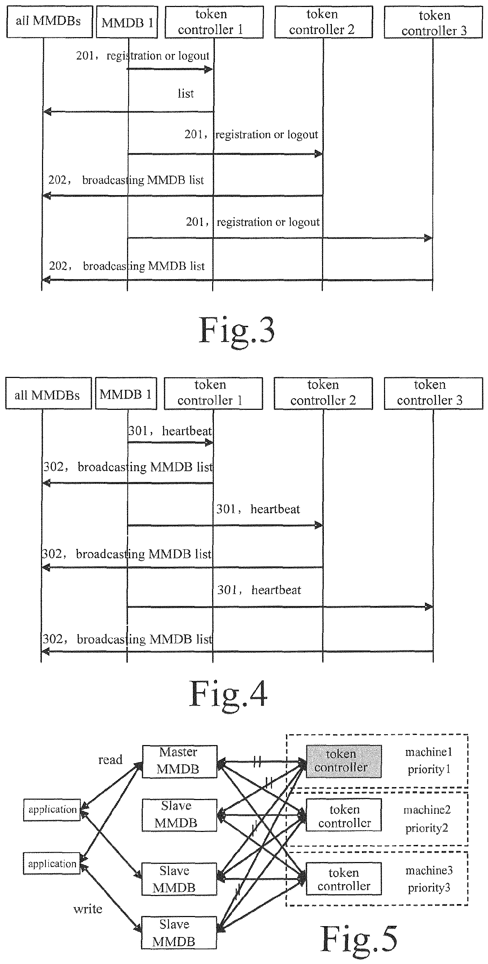

As illustrated in Fig. 2, there is provided a method for implementing a distributed database when the MMDB logs in keeps heartbeat or exits from the cluster. The method comprises:
(1) when a MMDB logs in the cluster, after the MMDB starts, the MMDB registers to each token controller, the following description is made based on that the MMDB is MMDB1, as illustrated in Fig. 3, comprising:
   Step 201: MMDB1 sends a registration message to each token controller so as to establish a connection with each token controller, and the registration message includes the node MMDB information of MMDB1, and specially includes: the name of MMDB1, IP address of MMDB1, MMDB port, the database priority of MMDB1 and etc.
   Step 202: after receiving the registration message, the token controller broadcasts, in the cluster, the MMDB list comprising the information within the cluster so as to respond to MMDB1, and meanwhile the token controller informs the entering of the MMDB1 into the cluster to other MMDBs of the cluster. In this way, each MMDB on the net can acknowledge the entering of the new MMDB, and adjust according to the controller priority of the newly entered MMDB.

The MMDB list includes: a name of each MMDB, IP address and port, master-slave information, and the controller priority of the present token controller. Here, the master-salve information may include which token controller is master token controller, and which token controller is slave token controller in the present network, and etc.

As illustrated in Fig. 4, (2) when MMDB1 logs in the cluster, it needs to keep heartbeat with the token controller.

Step 301: MMDB1 sends a heartbeat message to all of the token controllers periodically, and the heartbeat message comprises the node MMDB information of the MMDB1.

The above mentioned all of the token controllers comprise the token controller 1, the token controller 2 and the token controller 3.

The MMDB information are specially shown in the following Table 1:

**Table 1**

| | | | |
|---|---|---|---|
| MMDB name | MMDB IP address | MMDB port | MMDB priority |

wherein MMDB name: a unique name within MMDB1 cluster;
MMDB IP address: IP address within the MMDB1 cluster;
MMDB port: IP port number of the MMDB1 cluster;
MMDB priority: the controller priority of MMDB, which can be increased from 1, and the priority will be higher when the value of the MMDB priority is smaller.

Step 302: after each of the token controller receives the heartbeat message, each of the token controller broadcasts a response message comprising a MMDB list to all MMDBs in the cluster.

Each MMDB receives and stores the MMDB list, and updates the information within the cluster in the MMDB list according to the periodically received heartbeat message.

The MMDB list are specially shown in the following Table 2:

**Table 2**

| | | | | | |
|---|---|---|---|---|---|
| MMDB 1 name | MMDB IP address | MMDB port | MMDB priority | attribute (slave) | Priority of the token controller |
| MMDB 2 name | MMDB IP address | MMDB port | MMDB priority | attribute (slave) | |
| MMDB 3 name | MMDB IP address | MMDB port | MMDB priority | attribute (slave) | |
| ... | | | | | |
| MMDB N name | MMDB IP address | MMDB port | MMDB priority | attribute (slave) | |

wherein MMDB name: a unique name within the distributed MMDB system,
MMDB IP address: an IP address within the distributed MMDB system,
MMDB port: IP port of the distributed MMDB system,
MMDB priority: MMDB database priority, which can be increased from 1, and the MMDB priority will be higher when the value of the MMDB priority is smaller.

Attribute: the master-salve information of the MMDB, which is computed and designated by the token controller.

Priority of the token controller: the controller priority of the token controller that broadcasts the MMDB list.

The above embodiment only takes MMDB 1 as an example, and describes a procedure that MMDB1 sends heartbeat information so as to keep interactions with the token controller. In fact, the above procedure is performed by each MMDB, and the way of execution is similar to that of MMDB1, which will not be described in detail here.

Through the above registration and the above heartbeat procedure with the token controller, each MMDB may exchange information with the token controller, know respective MMDBs and respective token controllers in the cluster, and obtains:
the information of all token controllers, comprising the controller priority of each token controller;
all MMDB in the cluster, each MMDB name, IP address and port number and its master-slave information.

MMDB only base on the MMDB list of the token controller with the highest controller priority, while MMDB lists data broadcasted by token controllers with other priorities only serve as a backup, when the master token controller breaks down and the heartbeat is lost, MMDB will select a token controller with the second highest priority as the master token controller, and enable the MMDB list send by the token controller with the second highest priority.

(3) When the MMDB 1 exits from the cluster, the following will be described on the basis that MMDB is MMDB1. See Fig. 3, before exiting from the cluster, the MMDB1 logs out from each token controller, and thus MMDB1 sends a logout message to each token controller so as to cancel connection with each token controller, the logout message comprises the node MMDB information of MMDB. The execution procedure is similar as when logs out.

See the token controller breaks down scene as shown in Fig. 5, if MMDB does not receive the MMDB list send from a certain token controller within a period of time, or if the token controller also sends a heartbeat message to MMDB periodically, and MMDB does not receive the heartbeat message of the token controller, then MMDB will deem that the token controller is breakdown. When a token controller is breakdown, there are mainly two cases:
The controller priority of the breakdown token controller has the highest priority, i.e. the master token controller is breakdown, while other token controllers operates normally, i.e. the slave token controller are not breakdown, then a new token controller is required to take over the work of the breakdown token controller as the master token controller;
The controller priority of the breakdown token controller does not have the highest priority, i.e. a salve token controller is breakdown, then, since only the token controller with the highest priority is the master token controller, token controllers with other priority only serve as a backup, MMDB dose not need to take any special actions.

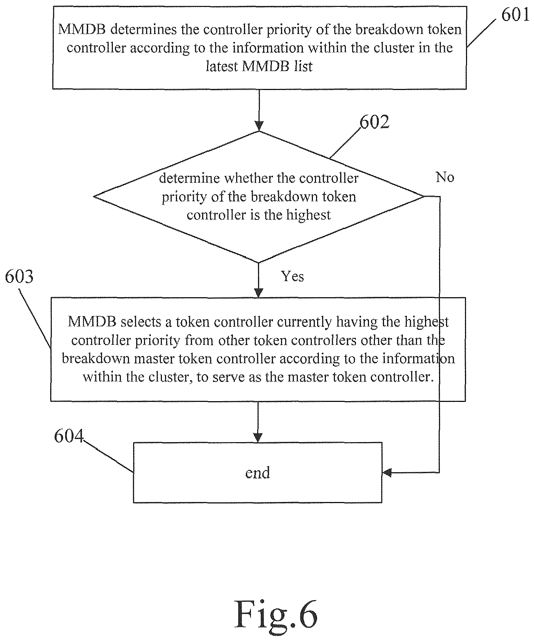

Therefore, the method for implementing the distributed MMDB as provided in the present embodiment is used when the affair in the cluster is: one token controller of at least of two token controllers is breakdown, as shown in Fig. 6, the step of handling, by the MMDB, transactions in the cluster according to the information within the cluster in the above MMDB list mainly comprises:
Step 601: MMDB determines the controller priority of the breakdown token controller according to the information within the cluster in the latest MMDB list;
Step 602: If the controller priority of the breakdown token controller is the highest priority, then go to Step 603; else, go to Step 604.
Step 603: MMDB selects a token controller currently having the highest controller priority from other token controllers besides the breakdown master token controller, to serve as the master token controller.
Step 604: end the procedure.

Specially, take MMBB being MMDB1 as an example, for example, MMDB1 finds out that the token controller 1 is breakdown, and determines the control priority of the token controller according to the information within the cluster in the MMDB list previously transmitted from the token controller 1, assume the control priority is A.

If A is the highest controller priority, it indicates that the token controller A is the master token controller at work, thus it is necessary to re-determine the master token controller. Therefore, MMDB1 selects the token controller 2 having the second highest controller priority from other valid slave token controller besides the token controller 1 according to the information within the cluster in the MMDB list, and the token controller 2 is used as the new master token controller. Thereafter, transactions are performed based on the MMDB list transmitted from the token controller 2; If A is not the highest controller priority, it indicates that the breakdown token controller A is a slave token controller, which does not have a significant impact on the cluster, and thus no special process is required and end the procedure. Here, assume that the controller priority A is the highest controller priority.

In the method provided by the present embodiment, when a token controller is breakdown, MMDB can determine whether the token controller is the master token controller according to the priority of the breakdown token controller. If yes, then the token controller having the second highest priority is selected as a new master token controller according to the information within the cluster in the MMDB list, such that when the master token controller breaks down, other token controllers take over the work of the original master token controller in time, and since the token controller that takes over the work of the original master token controller is also a hot machine, no delay occurs. In this way, the technical problems such as high cost caused by cold machine backup and complicated and breakable dual machine software can be solved, and thus the technical effects of reduced cost, easy and convenient, and high reliability can be achieved.

The above description describes a method for implementing a distributed MMDB when the transaction within the cluster is that the token controller breaks down. The following description will provide a method for implementing a distributed MMDB when the transaction within the cluster is that the breakdown token controller recovers from breakdown.

If the breakdown token controller recovers form breakdown and restarts, then the breakdown token controller will rejoin the cluster via a registration procedure, and thus MMDB can receive the MMDB list transmitted from the breakdown token controller again. The concrete registration procedure is shown in Fig. 3, which will not be described in detail here. If a breakdown token controller joins the cluster through re-registration, there are mainly two cases:
The controller priority of the token controller recovered from breakdown is higher than the controller priority of the current master token controller, then after the token controller recoveed from breakdown joins the cluster, it will be used as the new master token controller;
The controller priority of the token controller recovered from breakdown is lower than the controller priority of the current master token controller, then after the token controller recovered from breakdown joins the cluster, it will be used as a new slave token controller. At this time, only the token controller having the highest priority is working controller, while token controllers with other priorities can only be used as hot spare, and thus MMDB does not need to take any special action.

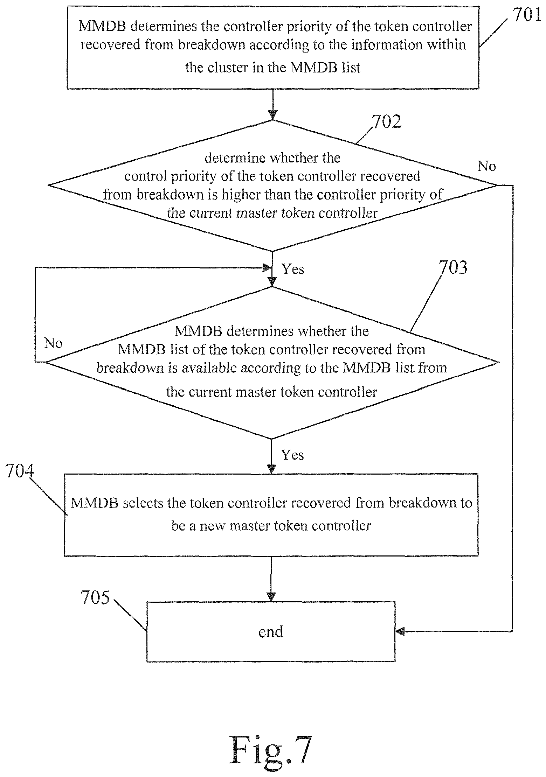

As shown in Fig. 7, when the token controller recovered from breakdown re-joins the cluster, the step of processing, by MMDB, transactions within the cluster according to the information within the cluster in the memory database list MMDB includes:
Step 701: After receiving a messaging comprising a MMDB list from the token controller recovered from breakdown, MMDB determines the controller priority of the token controller recovered from breakdown according to the information within the cluster in the MMDB list;
   Specially, take MMDB to be MMDB1 as an example, MMDB1 receives a registration message (which also can be a heartbeat message) comprising a MMDB list from the breakdown token controller 1, and determines the controller priority of the token controller 1 recovered from breakdown according to the information within the cluster in the MMDB list, the controller priority is A.
Step 702: If the control priority of the token controller recovered from breakdown is higher than the controller priority of the current master token controller, then go to Step 703; else, go to Step 705.
   Specially, for example, assume the controller priority of the current master token controller 2 is a, whether a is lower than the controller priority of A is determined, if a is lower that A, it indicates that the token controller 1 recovered from breakdown can be used as a new master token controller, then go to Step 703; else, it indicates that the token controller recovered from breakdown is a salve token controller, MMDB does not need to take any action, and go to Step 705.
Step 703: MMDB determines whether the MMDB list of the token controller recovered from breakdown is available according to the MMDB list from the current master token controller; if it is determined that the MMDB list of the token controller recovered from breakdown is available, then go to Step 704; else, when MMDB receives the MMDB list of the token controller recovered from breakdown next time, continue to perform Step 703.
   Specially, for example, MMDB1 checks whether the token controller 1 recovered from breakdown is consistent according to the MMDB list of the master token controller 2, i.e. whether the data on the MMDB list of the token controller 2 is consistent with the data on the MMDB list of the token controller 1. If they are inconsistent, that is to say, the token controller 1 has not established normal heartbeat with all MMDBs within the cluster, and the token controller 1 cannot be used. Therefore, it is necessary to check the MMDB list transmitted by the next heartbeat message, so as to determine whether the MMDB list transmitted by the next heartbeat message is consistent with the MMDB list of the token controller 1; if they are consistent, the token controller 1 has already established normal heartbeat with all MMDBs in the cluster, and enters into normal operating state. Therefore, the MMDB can be used, and go to Step 704.
Step 704: MMDB selects the token controller recovered from breakdown to be a new master token controller.
   Specially, for example: MMDB1 switches to the token controller 1 recovered from breakdown, and use the token controller 1 recovered from breakdown as the new working master token controller, and the transactions within the cluster are processed according to the MMDB list transmitted from the token controller 1, while the token controller 2 is used as a slave token controller.
Step 705: end the procedure.
   The method provided by the present embodiment can guarantee that the token controller having high controller priority can be used as master token controller after recovery, since the token controller having high priority is better in its configuration and performance, and is more suitable to work as the master token controller. Therefore, the technical solution that a token controller having better performance can be used as the master token controller after recovery is useful to guarantee the process ability of the token controller, and thereby improving reliability.

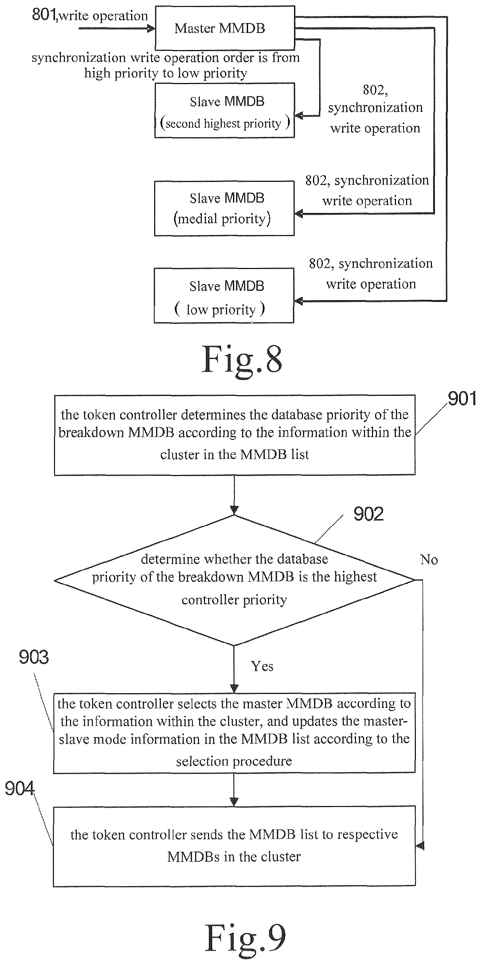

Fig. 8 provides a method for implementing a distributed MMDB when there is a write operation request. In a cluster of distributed MMDB, the master MMDB has already obtained the MMDB list in the cluster from the message of the token controller, when the transaction in the cluster is that the write operation request is received, the step of processing the transactions within the cluster according to the information within the cluster in the MMDB list comprises:
Step 801: the master MMDB updates the data information in the local MMDB according to the write operation request;
   Specially, the master MMDB updates the data information in the local MMDB according to the operations such as insertion, deletion and update in the write operation request, and adds an operation serial number according to an order that the write operation request is received.
Step 802: the master MMDB updates the write operation request to the slave MMDB according to the information within the cluster in the MMDB list, so that the slave MMDB updates the data information in the local MMDB.
   Specially, after the local MMDB has already been updated, the master MMDB sends the write operation request to respective slave MMDB database according to an order of respective slave MMDB database priorities from high to low, such that a slave MMDB having higher database priority will receive the write operation request first. The slave MMDB, which receives the write operation request, updates the data information in the local MMDB according to the operations such as insertion, deletion and update in the write operation request, and also adds an operation serial number according to an order that the write operation request is received. For example, the fifth write operation request is received from MMDB1, and thus a serial number 5 is added to the updated data information of MMDB1.

Generally, the reliability of MMDB is guaranteed in this way: if a slave MMDB breaks down, it will not have significant influence on the cluster to which the MMDB belongs, while only the cluster MMDB concurrency inquiry efficiency will be influenced, once a slave MMDB is added, the efficiency will be recovered. However, if the master MMDB breaks down, then there will be no database that MMDB can perform write operation, and thus such breakdown must be solved. In the present embodiment, when the cluster transactions are a certain MMDB of at least one MMDB breaks down, as shown in Fig. 9, the method for implementing the distributed MMDB comprises:
Step 901: the token controller determines the database priority of the breakdown MMDB according to the information within the cluster in the MMDB list;
   For example, the token controller 1 (which can be working master token controller, and also can be a slave token controller) determines the database priority of the breakdown MMDB1 according to the information within the cluster in the MMDB list. Assume the database priority of the breakdown MMDB1 is B.
Step 902: if the database priority of the breakdown MMDB is the highest controller priority, then go to Step 903; else go to Step 904;
Step 903: the token controller selects a MMDB currently having the highest database priority from other MMDBs other than the breakdown MMDB according to the information within the cluster to serve as the master MMDB, and updates the master-slave mode information in the MMDB list according to the selection procedure.
Step 904: the token controller sends the MMDB list to respective MMDBs in the cluster.

For example, if the token controller 1 determines that B is the highest database priority, it indicates MMDB 1 is the master MMDB, and thus a new MMDB is required to take over the work of MMDB1. Therefore, MMDB2 currently having the highest database priority is selected from other MMDBs other than MMDB1 according to the information within the cluster, i.e. compared with B, the MMDB2 having the second highest priority takes over the work of MMDB1 as the master MMDB, and updates the MMDB list according to the procedure of selecting MMDB2, comprising updating the master-salve information of MMDB2 (i.e. MMDB2 is changed from "salve" to "master") and labeling MMDB1 as breakdown and etc. The updated MMDB list is sent to respective MMDB of the cluster, MMDB2 will take over the work of MMDB1 as the master MMDB, such as performing write operation; if the token controller 1 determines that B is not the highest database priority, it indicates that MMDB1 is a slave MMDB, and thus no special action is required, only MMDB1 is labeled as breakdown in the MMDB list sent.

In the present embodiment, the token controller may select a MMDB from respective slave MMDBs to serve as a new master MMDB, and notify respective MMDBs by means of broadcasting MMDB list. When a slave MMDB receives a write operation request, the slave MMDB forwards the received write operation request to the new master MMDB; the new master MMDB updates the data information according to the write operation request, and then synchronizes the write operation request to respective slave MMDBs. However, there is a limit: which MMDB should be voluntarily selected as the new master MMDB. Generally, several MMDBs will be deployed in a cluster, while the abilities of the devices bearing these MMDBs are different, some devices have higher performance CPU and memory, and their prices are also high. We desire such devices to bear MMDB write operation, since write operation is about one fourth of read operation performance. Therefore, in order to realize automatic failover, the principle must be determined. For that, MMDBs deployed on respective devices must be configured with a database priority according to the performance of the devices bearing these MMDBs. The token controller can dynamically select the MMDB having the highest database priority, and designate it to be the master MMDB, and broadcast the designation to respective MMDBs within the cluster. In this way, the delay caused by manual switch is reduced, and reliability of the distributed MMDB is also improved.

The above description describes the method for implementing distributed MMDB when there is a breakdown MMDB, the following description will describe the method for implementing the distributed MMDB when the breakdown MMDB has been recovered (i.e. MMDB has been recovered from breakdown), comprising:
Step 1001: the MMDB recovered from breakdown sends a message comprising its node MMDB information to the token controller. After the token controller receives the message comprising the node memory data information from the MMDB recovered from breakdown, the token controller determines the database priority of the MMDB recovered from breakdown according to the node MMDB information of the MMDB recovered from breakdown, and arranges the node information of the MMDB into the MMDB list, and sends to each MMDB.

For example, the MMDB1 recovered from breakdown joins the cluster, the MMDB1 first registers to the token controller 1 (the token controller 1 may be the master token controller, and also may be a slave token controller). The registration message comprises node MMDB information of MMDB1. After receiving the registration message, the token controller 1 determines the database priority of MMDB1, since master MMDB2 currently works normally in the cluster, even the database priority of MMDB1 is higher than that of MMDB2, the token controller 1 will not select MMDB1 as the new master MMDB immediately since MMDB1 should update data information first. When the data information in MMDB1 is consistent with the data information of the current master MMDB2, then MMDB1 can be selected as the new master MMDB. Therefore, the token controller 1 only needs to arrange the node MMDB information of MMDB 1 into the MMDB list, and sends the list to each MMDB.

Step 1002: if the database priority of the MMDB recovered from breakdown is higher than the database priority of current master MMDB, then the MMDB recovered from breakdown sends a data update request to the master MMDB according to the information within the cluster, the data update request comprises an operation serial number of the data information finally recorded in the MMDB recovered from breakdown, so that the current master MMDB returns the data information of successive operation serial number; else, the MMDB recovered from breakdown does not need to take any action, and end the procedure without performing the following steps.

For example: MMDB1 that receives the MMDB list transmitted from the token controller 1 acquires that the current master MMDB in the cluster is MMDB2 according to the information within the cluster.

If the database priority of the MMDB1 recovered from breakdown is higher than the database priority of the current master MMDB2, then MMDB2 sends a data update request to MMDB2, the data update request comprises the operation serial number finally recorded in the MMDB1.

If the database priority of MMDB1 recovered from breakdown is lower than the database priority of the current master MMDB2, MMDB1 can directly end the procedure.

Step 1003: after receiving the data update request, the current master MMDB returns the successive operation serial number to the MMDB recovered from breakdown.

For example, the operation serial number in the data update request received by the current master MMDB2 is 10, and it indicates that the operation serial number of write operation finally executed by the MMDB 1 recovered from breakdown before breakdown is 10. Therefore, MMDB2 sends the data information with operation number from 11 to 30 (the latest) to MMDB1.

Step 1004, the MMDB recovered from breakdown updates the local MMDB of the MMDB recovered from breakdown according to the data information of the returned successive operation serial number, and sends a update complete response to the master MMDB, so that the master MMDB performs the process of exiting from the master MMDB mode.

For example: after receiving the data information returned from the current master MMDB2, the MMDB1 recovered from breakdown updates the local MMDB of the MMDB1, and completes data synchronization procedure, and transmits the update complete response to MMDB2.

Step 1005, after receiving the update complete response message, the current master MMDB performs the process of exiting from the master MMDB mode, comprising: the current master MMDB sends a request for exiting the master MMDB mode to the token controller, and meanwhile disables the local write function, once there is a write operation request, the current master MMDB forwards the write operation request to the MMDB recovered from breakdown which has the highest database priority.

For example, after receiving the update complete response message, the current MMDB2 transmits a request for exiting from the master MMDB mode to the token controller 1, and meanwhile disables the local write operation of MMDB2, once there is a write operation request, the current master MMDB2 forwards the write operation request to the MMDB1 recovered from breakdown.

Step 1006, after the current MMDB exits from the master MMDB mode, the token controller selects the MMDB recovered from breakdown to be a new master MMDB, and updates the master-slave information that the MMDB recovered from breakdown is the new master MMDB to the MMDB list, and broadcasts the MMDB list to each MMDB, and each MMDB can acknowledge that the current master MMDB has been changed to the new MMDB through the MMDB list.

For example: after the current master MMDB2 exits from the master MMDB mode, the token controller 1 selects the MMDB1 recovered from breakdown to be a new master MMDB, and updates the information into the MMDB list, and broadcast the MMDB list to each MMDB, each MMDB acknowledges that the current master MMDB has been changed to the MMDB1. After that, the write operation request is executed by MMDB1 having the highest priority. The write operation requests received by other MMDBs within the cluster are forwarded to MMDB1 for execution.

In the method provided by the present embodiment, the MMDB having the highest priority recovers from breakdown, and registers to the token controller when the MMDB restarts. At this time, the MMDB having the highest priority cannot be selected as a master MMDB yet, and the data information reproduction procedure should be carried out first, the current master MMDB will not request for exiting from the master MMDB mode until the data of the current master MMDB is synchronized to the MMDB having the highest priority and data consistency is achieved. At this time, the token controller determines the newly registered MMDB which has the highest priority to be the master MMDB, and broadcast the MMDB list to all MMDBs within the cluster. Therefore, the MMDB having a higher performance can work as the master MMDB again after recovering from breakdown.

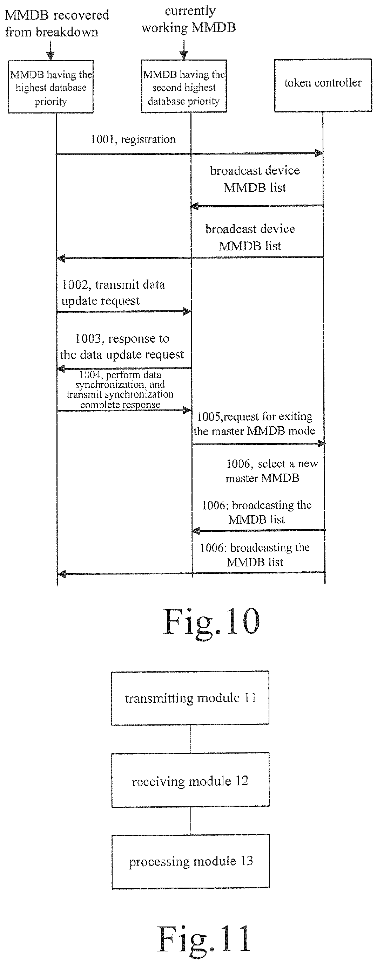

The present embodiment provides a MMDB, as shown in Fig. 11, the MMDB includes: a transmitting module 1, a receiving module 12 and a processing module 13.

The transmitting module is configured to transmit a message comprising node MMDB information to at least two token controllers; the receiving module is configured to receiving the message comprising the MMDB list from the at least two token controllers, respectively, wherein the MMDB list comprises the information within the cluster arranged according to at least one node MMDB information; the processing module is configured to process transactions within the cluster according to the information within the cluster in the MMDB list.

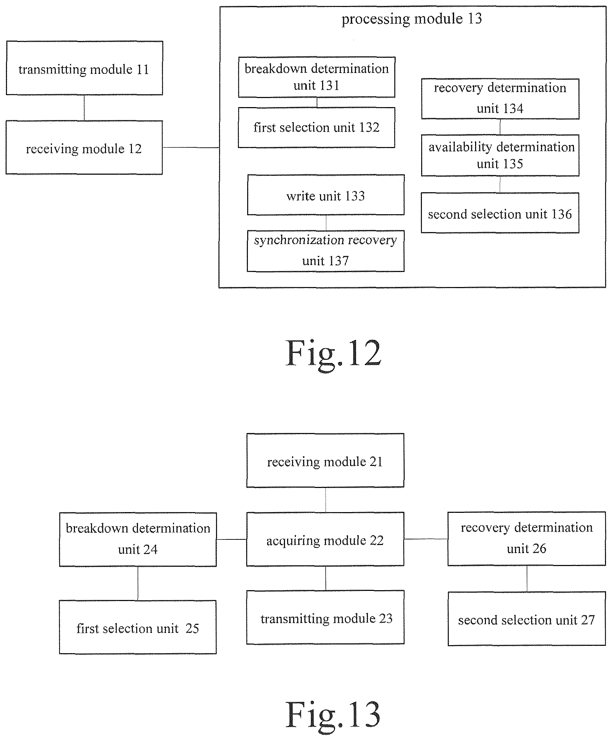

In another embodiment of the present disclosure, as shown in Fig. 12, in the MMDB, the processing module 13 may include: a breakdown determination unit 131 and a first selection unit 132.

The breakdown determination unit 131 is configured to determine, when there is a breakdown token controller, controller priority of the breakdown token controller according to the information within the cluster in the MMDB list;

The first selection unit 132 is configured to select the token controller currently having the highest controller priority from other token controllers other than the breakdown token controller to be the master token controller according to the information within the cluster when the breakdown determination unit 131 determines that controller priority of the breakdown token controller is the highest controller priority.

As shown in Fig. 12, the processing module may further include: a recovery determination unit 134, an available determination unit 135 and a second selection unit 136.

The recovery determination unit 134 is configured to determine the controller priority of the token controller recovered from breakdown according the information within the cluster in the MMDB list received from the token controller recovered from breakdown by the receiving module when the token controller recovered from breakdown rejoins the cluster;

The available determination unit 135 is configured to determine the availability of the MMDB list of the token controller recovered from breakdown according to the MMDB list from the current master token controller when the recovery determination unit 134 determines the controller priority of the token controller recovered from breakdown is higher than the controller priority of the current master token controller;

The second selection unit 136 is configured to select the token controller recovered from breakdown to be a new master token controller when the available determination unit 135 determines the token controller recovered from breakdown has availability.

As shown in Fig. 12, the processing module may further include: a write unit 133 and a synchronization recovery unit 137.

The write unit 133 is configured to receive a write operation request when in the master MMDB state, and update the data information in the local MMDB according to the write operation request, and update the write operation request to the slave MMDB according to the information within the cluster in the MMDB list, so as to update the data information in its local MMDB from the slave MMDB according to the write operation request.

The synchronization recovery unit 137 is configured to transmit the data update request to the master MMDB according to the information within the cluster in the MMDB list when the database priority is higher than the database priority of the current master MMDB, the data update request includes the operation serial number of the data information finally recorded in the higher MMDB, such that the master MMDB returns the data information of the successive operation serial number, and update the data information of the local MMDB according to the returned data information of the successive operation serial number, and transmit the update complete response to the master MMDB, such that the master MMDB performs the operation of exiting from the master MMDB mode.

The MMDB provided by the present embodiment and the token controller may be arranged on the same device, or they may be arranged on different devices, the network deployment is very flexible. No Active-Standby dual machine deployment is required, and no dual machine switching action is required, the network deployment is simple and reliable, and the switching procedure is finished automatically, such the delay caused by manual switching is avoided, thereby the reliability of the distributed MMDB is improved.

The present embodiment provides a token controller, as shown in Fig. 13, the token controller includes: a receiving module 21, an acquisition module 22 and a transmitting module 23.

The receiving module 21 is configured to receive a message comprising node memory data information from at least one MMDB; the acquisition module 22 is configured to acquire a MMDB list according to he node MMDB information, wherein the MMDB list includes the information within the cluster arranged according to at least one node MMDB information; the transmitting module 23 is configured to transmit the message comprising the MMDB list to at least one MMDB, so that the at least one MMDB processes the transactions within the cluster according to the information within the cluster in the MMDB list.

In the present embodiment, as shown in Fig. 13, the token controller may further include: a breakdown determination unit 24 and a first selection unit 25.

The breakdown determination unit 24 is configured to determine the database priority of the breakdown MMDB according to the information within the cluster in the MMDB list when one MMDB of the at least one MMDB breaks down;

The first selection unit 25 is configured to select the MMDB currently having the highest database priority from other MMDBs other than the breakdown MMDB to be the new master MMDB according to the information within the cluster when the breakdown determination unit 24 determines that the database priority of the breakdown MMDB is the highest controller priority.

Further, the token controller may further include: a recovery determination unit 26 and a second selection unit 27.

The recovery determination unit 26 is configured to determine the database priority of the MMDB recovered from breakdown according to the node MMDB information of the MMDB recovered from breakdown after receiving the message comprising the node memory data information from the MMDB recovered from breakdown;

The second selection unit 27 is configured to select the MMDB recovered from breakdown to be the new master MMDB when the recovery determination unit 26 determines that the database priority of the MMDB recovered from breakdown is higher than the database priority of the current master MMDB and after the current master MMDB exits from the master MMDB mode.

The token controller provided by the present embodiment is suitable to be arranged on working devices, i.e. hot machines. Therefore, the technical problem of deploying complicated dual machine software to cold machine and thus caused delay due to restarting of the cold machine during master-slave switching can be solved, and thus the technical effects of reducing the delay of performing token controller switching, improving reliability and reducing cost can be achieved.

The present embodiment provides a distributed MMDB system, as shown in Fig. 2, comprising: a MMDB cluster and a token controller cluster, wherein the MMDB cluster includes at least two token controllers, and the token controller cluster includes at least one MMDB;

Wherein each MMDB is configured to transmit a message comprising node MMDB information to the at least two token controllers, and receive messages comprising MMDB lists from the at least two token controllers, respectively, wherein the MMDB list includes information within the cluster arranged according to at least one MMDB information, and store an internal measurement data list, and process transactions within the cluster according to the information within the cluster in the MMDB list;

Each token controller is configured to receive the message comprising the node memory data information from the MMDB, and acquire the MMDB list according to the node MMDB information, and transmit the message comprising the MMDB list to the at least one MMDB.

The distributed MMDB system provided by the present embodiment does not need dual machine software to control the MMDB, and does not need Active-Standby dual machine solution. Each MMDB can acquire the MMDB list through interactions with token controllers, and process transactions within the cluster according to the MMDB list, thereby the delay for active-standby switching is reduced, and the complexity is reduced, and no standby device is required, and thus the cost is reduced, and the reliability of the distributed MMDB is improved.

The present embodiment also provides a method for implementing a distributed MMDB, in this method, at least two sites are included, a first site and a second site, each site is deployed with at least one MMDB and a token controller cluster that manages the MMDB cluster. Wherein, each MMDB cluster is composed of a plurality of MMDBs, and each token controller cluster is composed of a plurality of token controllers, and each token controller is configured with an IP address and a port of a token controller of an offsite site.

Since a MMDB can only belong to a MMDB cluster, and a write operation request can only operate on the master MMDB of the MMDB cluster, and thus in order that the MMDB does not reproduce a MMDB outside the cluster, in the present embodiment, following works should be done:
Before performing the following steps, the definition of the MMDB cluster should be extended.
   1. a site is defined as a domain, and the domain name is globally unique, for example: the domain name of site 1 (i.e. global site name) is mmdb_Site1, and the domain name of site 2 (i.e. global site name) is mmdb_Site2;
   2. each MMDB cluster within the site is configured with a cluster name, and the name is a string of character, which is unique within the site, the MMDB global name of the cluster is the combination of the cluster name and the global site name of the site, the format is cluster name @ global site name.
   3. each token controller within cluster has a token name, and the name is a string of character, and the token name is unique within the site, for example mmdb_ring1, the global name of the token controller is the combination of token name of the token controller in the site and global site name of the site, the format is: token name @ global site name, for example "mmdb_ring1@mmdb_Site1."
   4. each MMDB in the site has a memory name, and the memory name is a string of character, and the memory name is unique in the site, for example mmdb1, the global name of the MMDB is the combination of site name and the site domain name, the format is MMDB name @ site domain name, for example "mmdb1@mmdb_Site1."

Given that, in the present embodiment, each site is configured with a global site name;
Each MMDB cluster in the site is configured with a cluster name, and the cluster name and the global site name constitute the global cluster name of the MMDB cluster;
Each token controller in the site is configured with a token name, and the token name and the global site name constitute the global token controller name of the token controller;
Each MMDB in the site is configured with a memory name, and the memory name and the global site name constitute the global memory name of the MMDB.

Therefore, by comparing the postfix of the global site name, it can be determined whether the MMDB or the token controller is a local site or an offsite site, and different sites can also be distinguished according to the global site name after @.

Further, each MMDB of the MMDB cluster is configured with a database priority, and each token controller may be configured with controller priority, the embodiment of configuring the database priority and controller priority in the site may be reference to the embodiments of Figs. 1-Fig. 10, which will not be described here.

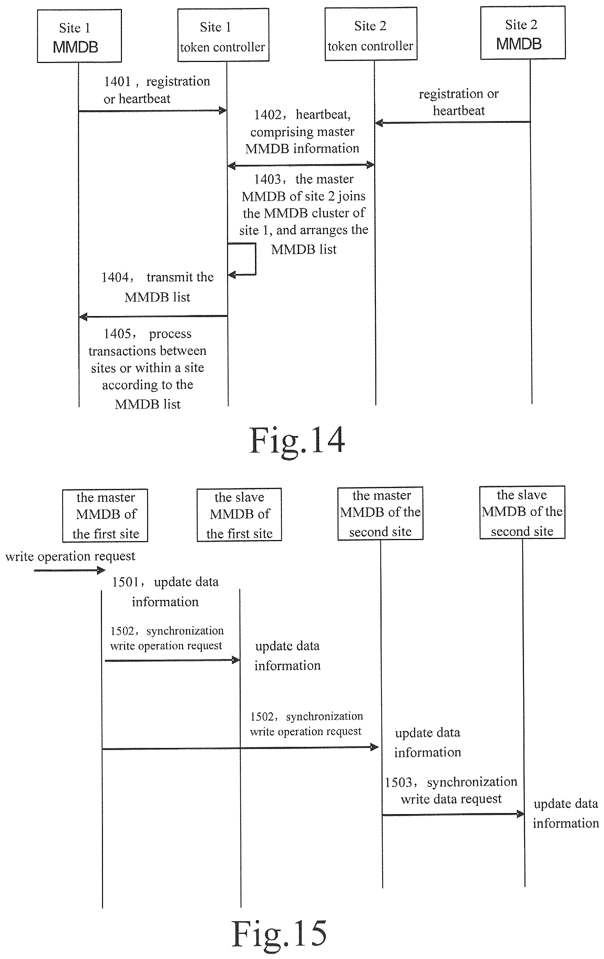

After performing the above extension and correspondingly, as shown in Fig. 14, the method mainly includes:
Step 1401: a MMDB of a first site transmits a message comprising node MMDB information to a token controller of the first site;
   Specially, each MMDB of the first sites transmits the message comprising its node MMDB information to token controller cluster of the first site, i.e. each token controller. The message comprising its node MMDB information may be a heartbeat message required to be transmitted periodically, and also may be a registration message transmitted when joining the MMDB cluster.

In the present embodiment and the following embodiments, the above node MMDB information at least comprises: the cluster name, the name of the local MMDB, IP address, and port and database priority.

For example, MMDB1 of the first site transmits a heartbeat message comprising the node MMDB information of MMDB1 to the token controller 1 of the first site, wherein the node MMDB information comprises: the name of the cluster to which MMDB 1 belongs, the name of the local MMDB of MMDB1, IP address, Port and database priority.

MMDB2 of the first site transmits a heartbeat message comprising the node MMDB information of MMDB2 to the token controller 1 of the first site, wherein the node MMDB information comprises: the name of the cluster to which MMDB2 belongs, the name of the local MMDB of MMDB1, IP address, Port and database priority.

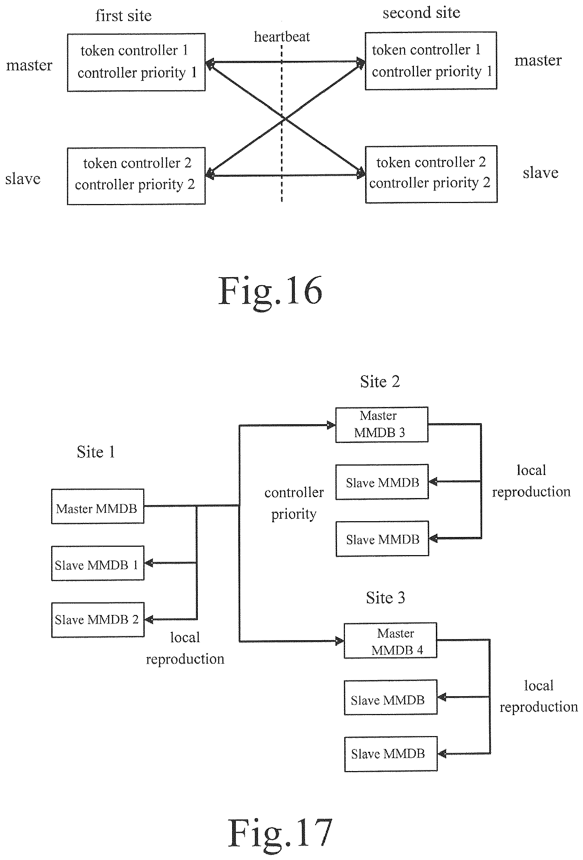

Step 1402, the token controller of the first site receives the message comprising the master MMDB information of the second site from the token controller of the second site;
Specially, as shown in Fig. 16, each token controller of the first site and each token controller of the second site interact via heartbeat messages to manage the master MMDB information of respective MMDB clusters, and further exchange token controller information with each other. That is to say, through the heartbeat message, each token controller of the first site can obtain the token controller information of the second site token controller that transmits the heartbeat message and the information of the master MMDB in the MMDB cluster that the token controller of the second site manages.

Wherein the token controller information includes: the global site name of the site to which the token controller belongs, the global name of the token controller, the controller priority of the token controller, and IP address and port of the token controller.

Wherein the master MMDB information includes: the global cluster name of the cluster to which the master MMDB belongs, the global memory name of the master MMDB, and IP address and port of the master MMDB.

For example, the token controller 1 of the site 1 and the token controller 1 of site 2 interact via the heartbeat message, and through the interaction, the token controller 1 acquires the master MMDB information of the site 1, and the token controller information of the token controller 2. Wherein the master MMDB information of the site 1 comprises: the global cluster name of the cluster to which the master MMDB belongs, the global memory name of the master MMDB, and IP address and port of the master MMDB; the token controller information of the token controller 2 comprises: the global site name of the site 2, the global name of the token controller 2, the controller priority of the token controller 2, IP address and Port of the token controller 2.

For the same reason, the token controller 2 can also acquire the master MMDB information of the token controller 1 of the site 2, and the token controller information of the token controller 1.

Step 1403: the token controller of the first site acquires the MMDB list of the first site according to the master MMDB information of the second site and the information within the cluster of the first site, wherein the information within the cluster of the first site is arranged according to the node MMDB information of a least one MMDB of the first site;
Wherein the above information within the cluster at least comprises: the node MMDB information of each MMDB that constitutes the MMDB cluster, the master-slave information of each MMDB that constitutes the MMDB cluster, and the controller priority of the token controller that transmits the MMDB list.

For example: the token controller 1 of the site 1 acquires the MMDB list of the site 1 according to the master MMDB information from the token controller 2 of the site 2 and the information within the cluster of the site 1. Wherein the information within the cluster in the MMDB list of the site 1 is arranged according to the node MMDB information from a plurality of MMDBs in the site 1;
It should be noted that the specially meaning of acquiring the MMDB list according the master MMDB information of the token controller 2 of the site 2 refers to: if it is determined, according to the master MMDB information of the token controller 2 of the site 2, that the mater MMDB of the site 2 is not in the MMDB cluster of the MMDB site 1, then the master MMDB of the site 2 is added in the MMDB cluster of site 1 as a slave MMDB in the MMDB cluster of site 1.

Step 1404: the token controller of the first site transmits the MMDB list of the first site to at least on MMDB of the first site, such that the MMDB can process inter-site or intra site transactions according to the MMDB list.

Wherein the inter-site or intra-site transactions refer to: transactions between the first site and the second site, or transactions within the first site, and may include: synchronizing the write operation request of the first site to the second site, synchronizing the write operation request of the second site to the first site, synchronizing processing of the write operation request when the master MMDB of the first site or the second site breaks down, the first site receives the write operation request from applications.

For example, the token controller 1 of the site 1 transmits the MMDB list of the above site 1 to MMDB1, MMDB2 and MMDB3 etc. of the site 1, such that the MMDB1, MMDB2 and MMDB 3 process transactions between the site 1 and the site 2, and transactions within the site 1 according to the MMDB list.

Step 1405: the MMDB of the first site acquires the MMDB list of the first site from the token controller of the first site, wherein the MMDB list comprises the master MMDB information of the second site that joins the fist site as a slave MMDB, and the information within the cluster of the first site arranged according to at least one node MMDB information; and the inter-site and intra-site transactions are processed according to the MMDB list.

Specially, the MMDB of the first site acquires the MMDB list of the first site, and processes the transactions between the first site and the second site, or transactions within the first site according to the MMDB list.

For example, the MMDB1 of the site 1 (the MMDB1 can be any MMDB) acquires the MMDB list of the site 1 according to the token controller 1 of the site 1 (the token controller 1 can be any token controller), wherein the MMDB list comprises: the information within the cluster arranged according to the node MMDB information of each MMDB in the MMDB cluster by the site 1, the master MMDB information of the master MMDB that joins the site 2 as a master MMDB. Wherein the information within the cluster comprises: the node MMDB information of each MMDB, the master-slave mode information of each MMDB, and the controller priority of the token controller that transmits the MMDB list; the master MMDB information of the master MMDB of the site 2 comprises: the global cluster name of the cluster to which the master MMDB belongs, the global memory name of the master MMDB, and IP address and port of the master MMDB.

It should be noted that: the above steps 1401-1405 are described by taking the site 1 and site 2 as an example, in fact, more sites may be included, for example, site 3 and site 4 and etc, the working manner of other sites is similar to that of the site 2. As in step 1405, the MMDB list received by the site 1 may further comprise: the master MMDB information of the site 3 that joins the MMDB cluster as a slave MMDB, and so on.

The procedure before the processing of the transactions between sites or within a site according to the MMDB list in steps 1401-1405 is described by taking a period as an example. In practical applications, the token controller of the site 1 and the token controller of the second site interact through the heartbeat message periodically, the MMDB of the site 1 and the token controller of the site 1 also interact though the heartbeat message periodically.

In the method provided by the present embodiment, the technical problem managing complicated data synchronization through running synching software is solved by acquiring the master MMDB information of each other through interactions between token controllers of the sites, and processing transactions such as data synchronization between sites and within a site according to the MMDB list, and thereby the complexity of data synchronization between sites is reduced. The reliability between sites is improved, and meanwhile the tolerant ability of the site is guaranteed. The method is applicable to large distributed MMDB scenario having a plurality of sites.

As shown in Fig. 15, when the transaction between sites or within a site is: the master MMDB of the site receives a write operation request, processing the transactions between sites or within a site according to the MMDB list includes:
Step 1501: when the master MMDB receives a write operation request from an application, the master MMDB within the first site updates the data information of the master MMDB according to the write operation request;
   Preferably, step 1501 may be performed as follow:
   When receiving the write operation request, the master MMDB within the first site adds an operational serial number to the received write operation request, and updates the data information of the master MMDB according to the write operation request.
Step 1502: the first site updates the data information of each slave MMDB according to the write operation request, wherein each slave MMDB includes: acquiring the salve MMDB in the first site according to the information within the cluster, and acquiring the master MMDB in the second site according to the master MMDB information;
   Specially, step 1502 includes: the first site updates the data information of each MMDB according to the write operation request, wherein the write operation request carries the global site name of the site belonged and the operation serial number of the write operation request, so as to record the operation serial number of the write operation request according to the global site name.
Step 1503: after updating the data information according to the write operation request, the master MMDB of the second site updates the data information of the slave MMDB of the second site according to the write operation request.

Specially, step 1503 includes: the master MMDB of the second site stores the write operation request to the position for storing the data information of the first site in the master MMDB of the second site according to the global site name of the first site, wherein in this position, the operation serial number corresponding to the data information updated by the write operation request is the operation serial number carried in the write operation request.

The above is described by taking the first site and the second site as an example. In fact, more sites can be included. For example, the third site, and the third site operates in a similar manner as that of the second site.

For example: see Fig. 17, the master MMDB of the site 1 receives the 100th write operation request from the application, and the write operation request is added with an operation serial number 100, and the data information of the master MMDB is updated according to the write operation request, comprising insertion, deletion, and updating; wherein the slave MMDB 3 joins the master MMDB of the site 1 and site 2 as a slave MMDB, the slave MMDB 4 joins the master MMDB of the site 1 and site 3 as a slave MMDB.

The slave MMDB 1 updates the data information of the slave MMDB1 at the position for storing the data information of the site 1 according to the write operation request, and the operation serial number of this portion is recorded as 100; the slave MMDB 2 updates the data information of the slave MMDB2 at the position for storing the data information of the site 1 in the slave MMDB 2 according to the write operation request, and the operation serial number of this portion is recorded as 100; similarly, the slave MMDB 3 updates the data information of the slave MMDB3 at the position for storing the data information of the site 1 in the slave MMDB 3 according to the write operation request, and the operation serial number of this portion is recorded as 100; the slave MMDB 4 updates the data information of the slave MMDB4 at the position for storing the data information of the site 1 in the slave MMDB 4 according to the write operation request, and the operation serial number of this portion is recorded as 100;

Specially, since the slave MMDB 3 is also the master MMDB of the site 2, and thus the write operation request is also synchronized to each slave MMDB of the site 2, and the write operation request carries the global site name of the site 1, the operation serial number 100, and insertion, deletion and updating operations and so on; after each slave MMDB of the site 2 receives the master MMDB of the site 2, i.e. the write operation request of the MMDB3, each slave MMDB of the site 2 updates corresponding data information at respective positions for storing the data information of the site 1, and the operation serial number of this portion is recorded as 100; similarly, since the MMDB 4 is also the master MMDB of the site 3, and thus the write operation request is also synchronized to each slave MMDB of the site 3, after each slave MMDB of the site 3 receives the master MMDB of the site 3, i.e. the write operation request of the MMDB4, each slave MMDB of the site 3 updates corresponding data information at respective positions for storing the data information of the site 1, and the operation serial number of this portion is recorded as 100.

In the method provided by the present method, the master MMDB of the first site only synchronizes the write operation request to the master MMDB of the second site, and the master MMDB of the second site is responsible for synchronizing the write operation request to respective slave MMDBs of the second site, instead of synchronizing the write operation request to the master MMDB and respective slave MMDBs. Therefore, the data traffic between sites is reduced, and the complexity of data synchronization between sites is reduced, the tolerant ability is guaranteed, and meanwhile the reliability of data synchronization between sites is improved.

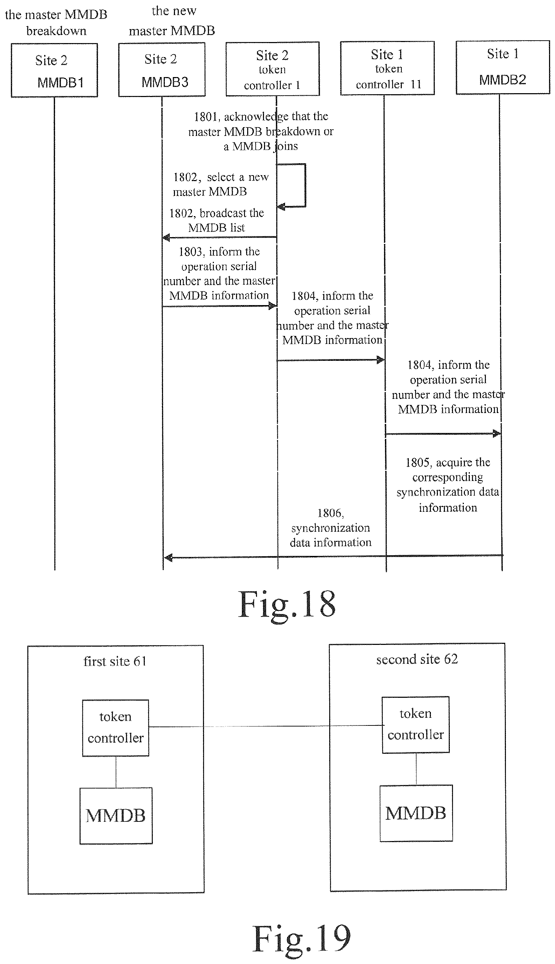

As shown in Fig. 18, in the method provided by the present embodiment, when the transactions between sites and within a site is that the master MMDB of the second site changes, the step of processing, by the MMDB of the first site, the transactions between sites or within a site according to the MMDB list comprises:
Step 1801: the token controller of the second site may acknowledge that the master MMDB is breakdown or a MMDB having a higher database priority than the master MMDB joins the MMDB cluster of the second site according to the heartbeat message.

For example, the token controller 1 of the site 2 (the token controller 1 may be the master token controller, or a slave token controller) does not receive the heartbeat message of the MMDB1 that works as the master MMDB in the current MMDB cluster, or the site 2 receives a registration message that MMDB2 having a higher database priority than MMDB1 joins the MMDB cluster.

Step 1802: the token controller of the second site selects a new master MMDB from the MMDB cluster according to the database priorities of respective MMDBs, and the result is indicated in the MMDB list, and each MMDB of the MMDB cluster of the site 2 is notified by broadcasting the MMDB list.

For example, the token controller 1 of the second site 2 selects MMDB2 as a new master MMDB according to the database priorities of respective MMDBs in the MMDB list, and the result is indicated in the MMDB list, the MMDB list is sent to respective MMDBs of the MMDB cluster of site 2, the respective MMDBs then acknowledges that MMDB2 is the new master MMDB.

Step 1803: the new master MMDB in the second site transmits its finally recorded operation serial number and the master MMDB information to the token controller of the second site. The token controller of the second site informs the operation serial number finally recorded by the new master MMDB and the master MMDB information to the token controller of the first site.

For example, after the MMDB2 of the site 2 works as the master MMDB, the operation serial number 100 finally recorded by the MMDB2 and the master MMDB information of the MMDB2 are send to the token controller 1 of the site 2. The token controller 1 of the site 2 informs the operation serial number 100 finally recorded by the MMDB2 and the master MMDB information to the token controller 11 of the site 1 (the token controller 11 may be the master token controller of the site 1, and also may be a slave token controller of the site 1). Wherein, the master MMDB information may include: the global cluster name of the MMDB cluster to which MMDB2 belongs, the global memory name of the MMDB2, and IP address and port of the MMDB2.

Step 1804: the token controller of the first site acquires the operation serial number finally recorded by the breakdown MMDB in the second site and the master MMDB information of the new master MMDB, and sends the message comprising the operation serial number and the master MMDB information of the new master MMDB to the master MMDB of the first site.

For example, the token controller 11 of the site 1 receives the operation serial number 100 finally recorded by the MMDB2 that works as the master MMDB in the site 2 and the master MMDB information of the MMDB2, and sends these to MMDB2 that currently serves as the master MMDB in the site 1.

Step 1805: the master MMDB of the first site acquires the master MMDB information of the new master MMDB in the second site and the operation serial number finally recorded by the master MMDB of the second site, and acquires the data information of the corresponding write operation according to the master MMDB information and the operation serial number.

For example, after the MMDB3 currently workings as the master MMDB in the site 1 receives the operation serial number 100 finally recorded by the new master MMDB of the site 2 (i.e. MMDB2) transmitted by the token controller 11 of the site 1, the MMDB3 acknowledges that the request is from the site 2 according to the global cluster name or the global memory name of the MMDB2, the data information of the write operation after the operation serial number 100 is acquired at a position that stores the site 2 data information.

Step 1806: the master MMDB of the first site updates the data information of the write operation to the new master MMDB of the second site.

For example, the MMDB3 of the site 1 transmits the data information of the write operation after the operation serial number 10 to the MMDB2 of the site 2, the MMDB2 of the site 2 updates the MMDB of the MMDB 2 according to the data information.

In the embodiment provided by the present disclosure, the architecture of the distributed MMDB may formed of a plurality of sites, each site may be deployed with at least one distributed MMDB cluster, the master MMDB of the MMDB cluster receives the write operation request of the application, and generates a unique incremental 64 bits data serial number for each operation, the data serial number is the operation serial number of the write operation request. When the master MMDB synchronizes the data information, the operation serial number must be carried in update request message as a parameter. Since each master MMDB at the same time works as a slave MMDB of the MMDB cluster of other sites, and receives the data information synchronized from other sites, and thus the mater MMDB must record the operation serial number and the global site name of other sites, so as to finish the data update procedure of the local site, and synchronizes the serial number, the write operation request and the site name to which the write operation request belongs to the slave MMDB of the local site. In this way, besides the operation serial number of the local MMDB cluster, each MMDB also records the operation serial number of the MMDB cluster in other sites (distinguished by the global site name).

Therefore, when the master MMDB of the site 1 breaks down, the token controller of the site 1 reselects a new master MMDB according to the local MMDB priorities, after receiving the MMDB list from the token controller, the new master MMDB returns messages such as the finally recorded operation serial number to the token controller, and the token controller informs the token controllers of other sites the operation serial number, and the token controllers of other sites transmit the operation serial number to the master MMDB of its MMDB cluster. The master MMDB may continue to synchronize the data information to the new master MMDB of the site 1 from the operation serial number, and the new master MMDB synchronizes the data information to respective MMDBs in the cluster. In this way, when the master MMDB breaks down, the site 1 can acquire the lost data information through the data synchronization procedure with other sites, and continues its function, and thereby the technical effects of reducing the complexity of the data synchronization procedure, improving the tolerant ability and higher reliability are achieved.

The present embodiment provides an alternative MMDB, as shown in Fig. 11, wherein the transmitting module 11 may be further configured to transmit a message comprising the node MMDB information to the token controller of the first site; the receiving module 12 may be further configured to acquire the MMDB list of the first site from the token controller of the first site, the MMDB list comprises the master MMDB information of the second site that joins the first site as a slave MMDB, and information within the cluster of the first site arranged according to at least one node MMDB information; the processing module 13 may be further configured to process the transactions between sites or within a site according to the MMDB list.

The present embodiment provides an alternative MMDB, as shown in Fig. 11, wherein the processing module 13 may further be configured to receive the write operation request when the MMDB device is at master MMDB state, and updates the data information of respective slave MMDBs according to the write operation request, wherein the respective MMDBs comprise: the slave MMDBs in the first site acquired according to the information within the cluster, and the master MMDB in the second site acquired according to the master MMDB information; and updates the data information of the slave MMDB in the first site according to the write operation request of the second site when the write operation request is from the master MMDB of the second site.

The present embodiment provides an alternative MMDB, as shown in Fig. 11, wherein the processing module 13 may further be configured to add an operation serial number to a write operation request when the write operation request is received; and may further be configured to carry the global site name of the site to which the write operation request belongs and the operation serial number of the write operation request, so that the respective MMDBs record the operation serial number of the write operation request according to the global site name.

The present embodiment provides an alternative MMDB, as shown in Fig. 11, wherein the processing module 13 may further be configured to acquire the master MMDB information of the new master MMDB and the operation serial number finally recorded by the master MMDB of the second site when the master MMDB of the second site changes, and acquires the data information of the corresponding write request according to the master MMDB information and operation serial number, and then updates the data information of the write request to the new master MMDB of the second site.

The MMDB device provided by the present embodiment can perform the procedure of data synchronization between sites without synchronization software, and meanwhile the tolerant ability of the site is guaranteed, and the reliability between sites is improved. Further, the MMDB device provided by the present embodiment is particular suitable for the scenario of large cross-site distributed MMDB, the cost of the solution is reduced, and thereby the competitive power is improved.

The present embodiment provides an alternative token controller, as shown in Fig. 13, wherein the receiving module 21 is further configured to receive a message comprising the mater MMDB information of the second site from the token controller of the second site; the acquiring module 22 is further configured to acquire the MMDB list of the first site according to the master MMDB information of the second site and the information within the cluster of the first site, wherein the information within the cluster of the first site is arranged according to the node MMDB information of at least one MMDB of the first site; the transmitting module 23 is further configured to transmit the MMDB list of the first site to at least one MMDB of the first site, so that the MMDB may process transactions between sites or within a site according to the MMDB list.

The present embodiment provides an alternative token controller, as shown in Fig. 13, the breakdown determination unit 24 is further configured to, when the master MMDB of the second site changes, acquire the operation serial number finally recorded by the new master MMDB in the second site and the master MMDB information from the token controller of the second site, and transmits the message carrying the operation serial number and the master MMDB information of the master MMDB to the master MMDB of the first site.

The token controller provided by the present embodiment can replace the synchronization software to control the procedure of data synchronization between sites, and thereby reducing the complexity of the data synchronization procedure, improving the tolerant ability and higher reliability are achieved.

As shown in Fig. 19, the present embodiment provides a site system, the system comprises at least: a first site 61 and a second site 62.

The token controller in the first site 61 is configured to receive a message comprising the master MMDB information of the second site from the token controller of the second site 62, and acquire the MMDB list of the first site according to the master MMDB information of the second site 62 and the information within the cluster of the first site 61, and transmit the MMDB list of the first site 61 to the MMDB of the first site 61;

The MMDB in the first site 61 is configured to transmit the message comprising the node MMDB information to the token controller of the first site 61, and acquire the MMDB list of the first site 61 from the token controller of the site 61, and process transactions of the first site 61 or transactions between the first site 61 and the second site 62 according to the MMDB list.

Wherein the MMDB list comprises: the master MMDB information of the second site 62 that joins the first site 61 as a MMDB, and the information within the cluster of first site 61 arranged according to the node MMDB information.

Additionally, the MMDB and the cluster within the second site may be executed in the same way as the MMDB and the token controller in the first site, so as to complete the transactions between the first site and second site or transactions within the second site.

In the prior art, the data synchronization between different sites is controlled by synchronization application, such that the tolerant ability of the distributed MMDB is guaranteed. However, the procedure is complicated, and the expanded function is poor, and thus the distributed MMDB is easy to break down, and the reliability is poor. In the solution provided by the present embodiment, the technical problem of higher complexity and poor expanded function can be avoided by using the following technical measures: two different sites exchange the MMDB information of each other through interactions of their token controllers, and process transactions between sites or within a site according to the MMDB information comprising the information and the information within the cluster, and thereby the technical effects of tolerant ability and higher reliability can be achieved.

Through the above description, persons skilled in the art clearly known the present disclosure may be implemented through software in combination with necessary hardware. However, the present disclosure may be implemented hardware, while in most cases, the former is preferred. Based on this comprehension, the portion of the technical solution of the present disclosure that contributes to the prior art may be embodied in software product, the computer software product may be stored in the readable storage medium, such as keyboard, hard disk and optical disk and so on, and comprise instructions causing a device, which may a notebook, to execute the methods of the embodiments of the present disclosure.

The above disclosure only relates specific embodiments of the present disclosure, while the scope of the present disclosure is not limited to the above description, any changes and alternatives that can be easily thought of by persons skilled in the art within the scope of the present disclosure should be considered within the scope of the present disclosure. Therefore, the scope of the present disclosure should be determined based on the claims.

## Claims

1. A method for implementing a distributed memory database, comprising the following steps executed by a memory database within a cluster:
periodically transmitting (101) a message comprising node memory database information to at least two token controllers which are responsible for managing the cluster, the node memory database information comprising one or more of name of a local memory database, Internet IP address, port and database priority;
periodically receiving (102) a message comprising a memory database list respectively from the at least two token controllers, wherein the memory database list comprises information within the cluster arranged according to at least one of the node memory database information, the information within the cluster comprising one or more of the node memory database information of each memory database that constitutes the cluster, master-slave mode information of each memory database that constitutes the cluster, and controller priority of a token controller that transmits the memory database list; and
processing (103) transactions within the cluster according to the information within the cluster in the memory database list;
wherein the processing (103) transactions within the cluster according to the information within the cluster in the memory database list comprises processing (103) transactions within the cluster based on the information within the cluster in the memory database list from a master token controller when the message comprising the memory database list is received from the master token controller of the at least two token controllers;
when the memory database is a master memory database, and the situation within the cluster is that one token controller of the at least two token controllers breaks down, the step of processing (103) transactions within the cluster according to the information within the cluster in the memory database list comprises:
determining (601) controller priority of the breakdown token controller according to the information within the cluster in the memory database list;
if the controller priority of the breakdown token controller is the highest controller priority (602), then selecting (603) a token controller currently having the highest controller priority to be a master token controller from other token controller other than the breakdown token controller according to the information within the cluster; and
when the memory database is the master memory database, and when the token controller recovered from breakdown rejoins the cluster, the step of processing (103) transactions within the cluster according to the information within the cluster in the memory database list comprises:
after the message comprising the memory database list from the token controller recovered from breakdown is received, determining (701) the controller priority of the token controller recovered from breakdown according to the information within the cluster in the memory database list;
if the controller priority of the token controller recovered from breakdown is higher than the controller priority of the current master token controller (702), then determining (703) availability of the memory database list of the token controller recovered from breakdown according to the memory database list from the current master token controller;
if it is determined that the memory database list of the token controller recovered from breakdown has availability (703), then selecting (704) the token controller recovered from breakdown to be a new master token controller.

2. The method according to claim 1, wherein when the memory database is a memory database having a higher database priority than a master memory database, and when the higher memory database joins the cluster, then the step of processing (103) transactions within the cluster according to the information within the cluster in the memory database list comprises:
transmitting (1002) a data update request to the master memory database according to the information within the cluster in the memory database list, and the data update request comprises an operation serial number of data information finally recorded in the higher memory database, such that the master memory database returns the data information of the successive operation serial number;
updating (1004) a local memory database of the higher memory database according to the returned data information of the successive operation serial number, and transmitting a update complete response to the master memory database, so that the master memory database performs a process of existing a master memory database mode.

3. The method according to claim 1, further comprising:
transmitting (1001) the message comprising the node memory database information to a token controller of a first site;
acquiring (1405) a memory database list of the first site from the token controller of the first site, wherein the memory database list comprises master memory database information of a second site that joins the first site as a slave memory database, and information within a cluster of the first site arranged according to at least one of the node memory database information;
processing (1405) a transaction between the sites according to the memory database list, and
wherein when a write operation request is received, then the step of processing (1405) a transaction between the sites according to the memory database list comprises:
updating (1502) the data information of the respective slave memory databases according to the write operation request, wherein the respective slave memory databases comprise: a slave memory database in the first site acquired according to the information within the cluster, and a master memory database in the second site acquired according to the master memory database information;
after the master memory database of the second site updates the data information according to the write operation request, updating (1503) the data information of the slave memory database of the second site according to the write operation request.

4. The method according to claim 3, wherein when the write operation request is received, the method further comprising: adding an operation serial number to the received write operation request;
the step of updating (1502) the data information of the respective slave memory databases according to the write operation request comprises:
updating the data information of the respective slave memory databases according to the write operation request, wherein the write operation request carries a global site name of the site to which the write operation belongs and the operation serial number of the write operation request, so that the respective slave memory databases record the operation serial number of the write operation request according to the global site name.

5. A method for implementing a distributed memory database, comprising the following steps executed by a token controller which is responsible for managing a cluster:
periodically receiving a message comprising node memory data information from at least one memory database within the cluster, the node memory database information comprising one or more of name of a local memory database, Internet IP address, port and database priority;
acquiring a memory database list according to the node memory database information, wherein the memory database list comprises information within a cluster arranged according to at least one of the node memory database information, the information within the cluster comprising one or more of the node memory database information of each memory database that constitutes the cluster, master-slave mode information of each memory database that constitutes the cluster, and controller priority of the token controller that acquires the memory database list;
periodically transmitting the message comprising the memory database list to the at least one memory database, such that the at least one memory database processes a transaction within the cluster according the information within the cluster in the memory database list;
wherein processes a transaction within the cluster according the information within the cluster in the memory database list comprises:
processing transactions within the cluster is based on the information within the cluster in the memory database list from a master token controller of at least two token controllers when the received message comprising the memory database list is from the master token controller; and
when the situation within the cluster is that one token controller of the at least two token controllers breaks down, determining controller priority of the breakdown token controller according to the information within the cluster in the memory database list, if the controller priority of the breakdown token controller is the highest controller priority , then selecting a token controller currently having the highest controller priority to be a master token controller from the at least two token controllers other than the breakdown token controller according to the information within the cluster;
when situation within the cluster is that the token controller recovered from breakdown rejoins the cluster, after the message comprising the memory database list from the token controller recovered from breakdown is received, determining the controller priority of the token controller recovered from breakdown according to the information within the cluster in the memory database list;
if the controller priority of the token controller recovered from breakdown is higher than the controller priority of the current master token controller, then determining availability of the memory database list of the token controller recovered from breakdown according to the memory database list from the current master token controller;
if it is determined that the memory database list of the token controller recovered from breakdown has availability, then selecting the token controller recovered from breakdown to be a new master token controller.

6. The method according to claim 5, wherein when one of the at least one memory database breaks down, the method further comprises:
determining a database priority of the breakdown memory database based on the information within the cluster in the memory database list;
if the database priority of the breakdown memory database is the highest controller priority, then selecting a memory database currently having the highest database priority as a new master memory database from memory databases other than the breakdown memory database according to the information within the cluster.

7. A distributed memory database system, comprising:
at least two token controllers; and
at least one memory database, the memory database comprising:
a transmitting module (11), configured to periodically transmit a message comprising node memory database information to the at least two token controllers, the node memory database information comprising one or more of name of a local memory database, Internet IP address, port and database priority;
a receiving module (12), configured to periodically receive a message comprising a memory database list respectively from the at least two token controllers, wherein the memory database list comprises information within a cluster arranged according to at least one of the node memory database information, the information within the cluster comprising one or more of the node memory database information of each memory database that constitutes the cluster, master-slave mode information of each memory database that constitutes the cluster, and controller priority of a token controller that transmits the memory database list;
a processing module (13), configured to process a transaction within the cluster according to the information within the cluster in the memory database list, wherein processing transactions within the cluster is based on the information within the cluster in the memory database list from a master token controller when the message comprising the memory database list is received from the master token controller of the at least two token controllers;
wherein the processing module (13) comprises:
a breakdown determination unit (131), configured to determine controller priority of a breakdown token controller according to the information within the cluster in the memory database list when a token controller breaks down;
a first selection unit (132), configured to select a token controller currently having the highest controller priority to be a master token controller from token controllers other than the breakdown token controller according to the information within the cluster when the breakdown determination unit (131) determines that the controller priority of the breakdown token controller is the highest controller priority;
a recovery determination unit (134), configured to determine controller priority of a token controller recovered from breakdown according to the information within the cluster in the memory database list received by the receiving module from the token controller recovered from breakdown when the token controller recovered from breakdown rejoins the cluster;
an availability determination unit (135), configured to determine availability of the memory database list of the token controller recovered from breakdown according to the memory database list from the current token controller when the recovery determination unit (134) determines that the controller priority of the token controller recovered from breakdown is higher than the controller priority of the current master token controller;
a second selection unit (136), configured to select the token controller recovered from breakdown to be a new master token controller when the availability determination unit (135) determines that the memory database list of the token controller recovered from breakdown has availability.

8. The system according to claim 7, wherein each one of the token controllers comprises:
a receiving module (21), configured to periodically receive a message comprising node memory database information from at least one memory database, the node memory database information comprising one or more of name of a local memory database, Internet IP address, port and database priority;
an acquiring module (22), configured to acquire a memory database list according to the node memory database information, wherein the memory database list comprises information within a cluster arranged according to at least one of the node memory database information, the information within the cluster comprising one or more of the node memory database information of each memory database that constitutes the cluster, master-slave mode information of each memory database that constitutes the cluster, and controller priority of the token controller that acquires the memory database list;
a transmitting module (23), configured to periodically transmit a message comprising the memory database list to the at least one database, such that the at least one memory database processes a transaction within the cluster according to the information within the cluster in the memory database list.

9. The system according to claim 8, wherein each one of the token controllers further comprises:
a recovery determination unit (26), configured to determine the database priority of the memory database recovered from breakdown according to the node memory database information of the memory database recovered from breakdown after the memory database recovered from breakdown receives the message comprising the node memory database information;
a second selection unit (27), configured to select the memory database recovered from breakdown to be a new master memory database after the current master memory database exits from a master memory database mode, when the recovery determination unit (26) determines that the database priority of the memory database recovered from breakdown is higher than the database priority of the current master memory database.

10. The system according to claim 8, wherein each one of the token controllers further comprises:
a breakdown determination unit (24), configured to determine a database priority of a breakdown memory database according to the information within the cluster in the memory database list when one memory database of the at least one memory database breaks down;
a first selection unit (25), configured to select a memory database currently having the highest database priority to be a new master memory database from memory databases other than the breakdown memory "database according to the information within the cluster when the breakdown determination unit (24) determines that the database priority of the breakdown memory database is the highest controller priority.

## Patentansprüche

1. Verfahren zum Implementieren einer verteilten Speicherdatenbank, das die folgenden Schritte, die durch eine Speicherdatenbank in einem Cluster ausgeführt werden, umfasst:
periodisches Übertragen (101) einer Nachricht, die Knoten-Speicherdatenbankinformationen umfasst, zu mindestens zwei Token-Steuerungen, die für das Verwalten des Clusters zuständig sind, wobei die Knoten-Speicherdatenbankinformationen einen Namen einer lokalen Speicherdatenbank und/oder eine Internet-IP-Adresse und/oder einen Anschluss und/oder eine Datenbankpriorität umfassen;
periodisches Empfangen (102) einer Nachricht, die eine Speicherdatenbankliste umfasst, von jeweils den mindestens zwei Token-Steuerungen, wobei die Speicherdatenbankliste Informationen im Cluster umfasst, die gemäß mindestens einer der Knoten-Speicherdatenbankinformationen angeordnet sind, wobei die Informationen im Cluster die Knoten-Speicherdatenbankinformationen jeder Speicherdatenbank, die den Cluster bildet, und/oder Master-Slave-Modusinformationen jeder Speicherdatenbank, die den Cluster bildet, und/oder eine Steuerungspriorität einer Token-Steuerung, die die Speicherdatenbankliste überträgt, umfassen; und
Verarbeiten (103) von Transaktionen im Cluster gemäß den Informationen im Cluster in der Speicherdatenbankliste;
wobei das Verarbeiten (103) von Transaktionen im Cluster gemäß den Informationen im Cluster in der Speicherdatenbankliste Verarbeiten (103) von Transaktionen im Cluster basierend auf den Informationen im Cluster in der Speicherdatenbankliste von einer Master-Token-Steuerung umfasst, wenn die Nachricht, die die Speicherdatenbankliste umfasst, von der Master-Token-Steuerung der mindestens zwei Token-Steuerungen empfangen wird;
wenn die Speicherdatenbank eine Master-Speicherdatenbank ist und der Zustand im Cluster ist, dass eine Token-Steuerung der mindestens zwei Token-Steuerungen ausfällt, der Schritt des Verarbeitens (103) von Transaktionen im Cluster gemäß den Informationen im Cluster in der Speicherdatenbankliste Folgendes umfasst:
Bestimmen (601) einer Steuerungspriorität der ausgefallenen Token-Steuerung gemäß den Informationen im Cluster in der Speicherdatenbankliste;
falls die Steuerungspriorität der ausgefallenen Token-Steuerung die höchste Steuerungspriorität ist (602), dann Auswählen (603), dass eine Token-Steuerung, die gegenwärtig die höchste Steuerungspriorität aufweist, eine Master-Token-Steuerung ist, aus anderen Token-Steuerungen außer der ausgefallenen Token-Steuerung gemäß den Informationen im Cluster; und
wenn die Speicherdatenbank die Master-Speicherdatenbank ist und wenn die vom Ausfall wiederhergestellte Token-Steuerung dem Cluster wieder beitritt, der Schritt des Verarbeitens (103) von Transaktionen im Cluster gemäß den Informationen im Cluster in der Speicherdatenbankliste Folgendes umfasst:
nachdem die Nachricht, die die Speicherdatenbankliste umfasst, von der vom Ausfall wiederhergestellten Token-Steuerung empfangen wird, Bestimmen (701) der Steuerungspriorität der vom Ausfall wiederhergestellten Token-Steuerung gemäß den Informationen im Cluster in der Speicherdatenbankliste;
falls die Steuerungspriorität der vom Ausfall wiederhergestellten Token-Steuerung höher als die Steuerungspriorität der gegenwärtigen Master-Token-Steuerung ist (702), dann Bestimmen (703) einer Verfügbarkeit der Speicherdatenbankliste der vom Ausfall wiederhergestellten Token-Steuerung gemäß der Speicherdatenbankliste von der gegenwärtigen Master-Token-Steuerung;
falls bestimmt wird, dass die Speicherdatenbankliste der vom Ausfall wiederhergestellten Token-Steuerung eine Verfügbarkeit aufweist (703), dann Auswählen (704), dass die vom Ausfall wiederhergestellte Token-Steuerung eine neue Master-Token-Steuerung ist.

2. Verfahren nach Anspruch 1, wobei, wenn die Speicherdatenbank eine Speicherdatenbank ist, die eine höhere Datenbankpriorität als eine Master-Speicherdatenbank aufweist, und wenn die höhere Speicherdatenbank dem Cluster beitritt, dann der Schritt des Verarbeitens (103) von Transaktionen im Cluster gemäß den Informationen im Cluster in der Speicherdatenbankliste Folgendes umfasst:
Übertragen (1002) einer Datenaktualisierungsanfrage zur Master-Speicherdatenbank gemäß den Informationen im Cluster in der Speicherdatenbankliste und die Datenaktualisierungsanfrage umfasst eine Vorgangsseriennummer von Dateninformationen, die zuletzt in der höheren Speicherdatenbank aufgezeichnet wurden, so dass die Master-Speicherdatenbank die Dateninformationen der folgenden Vorgangsseriennummer herausgibt;
Aktualisieren (1004) einer lokalen Speicherdatenbank der höheren Speicherdatenbank gemäß den herausgegebenen Dateninformationen der folgenden Vorgangsseriennummer und Übertragen einer Aktualisierung-Beendet-Antwort zur Master-Speicherdatenbank, so dass die Master-Speicherdatenbank einen Prozess des Austretens aus einem Master-Speicherdatenbank-Modus durchführt.

3. Verfahren nach Anspruch 1, ferner umfassend:
Übertragen (1001) der Nachricht, die die Knoten-Speicherdatenbankinformationen umfasst, zu einer Token-Steuerung einer ersten Site;
Erfassen (1405) einer Speicherdatenbankliste der ersten Site von der Token-Steuerung der ersten Site, wobei die Speicherdatenbankliste Master-Speicherdatenbankinformationen einer zweiten Site, die der ersten Site als eine Slave-Speicherdatenbank beitritt, und Informationen in einem Cluster der ersten Site, die gemäß mindestens einer der Knoten-Speicherdatenbankinformationen angeordnet sind, umfasst;
Verarbeiten (1405) einer Transaktion zwischen den Sites gemäß der Speicherdatenbankliste und
wobei, wenn eine Schreibvorgangsanfrage empfangen wird, dann der Schritt des Verarbeitens (1405) einer Transaktion zwischen den Sites gemäß der Speicherdatenbankliste Folgendes umfasst:
Aktualisieren (1502) der Dateninformationen der jeweiligen Slave-Speicherdatenbanken gemäß der Schreibvorgangsanfrage, wobei die jeweiligen Slave-Speicherdatenbanken eine Slave-Speicherdatenbank in der ersten Site, die gemäß den Informationen im Cluster erfasst wird, und eine Master-Speicherdatenbank in der zweiten Site, die gemäß den Master-Speicherdatenbankinformationen erfasst wird, umfassen;
nachdem die Master-Speicherdatenbank der zweiten Site die Dateninformationen gemäß der Schreibvorgangsanfrage aktualisiert, Aktualisieren (1503) der Dateninformationen der Slave-Speicherdatenbank der zweiten Site gemäß der Schreibvorgangsanfrage.

4. Verfahren nach Anspruch 3, wobei, wenn die Schreibvorgangsanfrage empfangen wird, das Verfahren ferner Hinzufügen einer Vorgangsseriennummer zur empfangenen Schreibvorgangsanfrage umfasst;
der Schritt des Aktualisierens (1502) der Dateninformationen der jeweiligen Slave-Speicherdatenbanken gemäß der Schreibvorgangsanfrage Folgendes umfasst:
Aktualisieren der Dateninformationen der jeweiligen Slave-Speicherdatenbanken gemäß der Schreibvorgangsanfrage, wobei die Schreibvorgangsanfrage einen globalen Site-Namen der Site, zu der der Schreibvorgang gehört, und die Vorgangsseriennummer der Schreibvorgangsanfrage führt, so dass die jeweiligen Slave-Speicherdatenbanken die Vorgangsseriennummer der Schreibvorgangsanfrage gemäß dem globalen Site-Namen aufzeichnen.

5. Verfahren zum Implementieren einer verteilten Speicherdatenbank, das die folgenden Schritte, die durch eine für das Verwalten eines Clusters zuständigen Token-Steuerung ausgeführt werden, umfasst:
periodisches Empfangen einer Nachricht, die Knoten-Speicherdateninformationen umfasst, von mindestens einer Speicherdatenbank im Cluster, wobei die Knoten-Speicherdatenbankinformationen einen Namen einer lokalen Speicherdatenbank und/oder eine Internet-IP-Adresse und/oder einen Anschluss und/oder eine Datenbankpriorität umfassen;
Erfassen einer Speicherdatenbankliste gemäß den Knoten-Speicherdatenbankinformationen, wobei die Speicherdatenbankliste Informationen in einem Cluster umfasst, die gemäß mindestens einer der Knoten-Speicherdatenbankinformationen angeordnet sind, wobei die Informationen im Cluster die Knoten-Speicherdatenbankinformationen jeder Speicherdatenbank, die den Cluster bildet, und/oder Master-Slave-Modusinformationen jeder Speicherdatenbank, die den Cluster bildet, und/oder eine Steuerungspriorität der Token-Steuerung, die die Speicherdatenbankliste erfasst, umfassen;
periodisches Übertragen der Nachricht, die die Speicherdatenbankliste umfasst, zu der mindestens einen Speicherdatenbank, so dass die mindestens eine Speicherdatenbank eine Transaktion im Cluster gemäß den Informationen im Cluster in der Speicherdatenbankliste verarbeitet;
wobei das Verarbeiten einer Transaktion im Cluster gemäß den Informationen im Cluster in der Speicherdatenbankliste Folgendes umfasst:
das Verarbeiten von Transaktionen im Cluster basiert auf den Informationen im Cluster in der Speicherdatenbankliste von einer Master-Token-Steuerung von mindestens zwei Token-Steuerungen, wenn die empfangene Nachricht, die die Speicherdatenbankliste umfasst, von der Master-Token-Steuerung kommt; und
wenn der Zustand im Cluster ist, dass eine Token-Steuerung der mindestens zwei Token-Steuerungen ausfällt, Bestimmen einer Steuerungspriorität der ausgefallenen Token-Steuerung gemäß den Informationen im Cluster in der Speicherdatenbankliste, falls die Steuerungspriorität der ausgefallenen Token-Steuerung die höchste Steuerungspriorität ist, dann Auswählen, dass eine Token-Steuerung, die gegenwärtig die höchste Steuerungspriorität aufweist, eine Master-Token-Steuerung ist, aus den mindestens zwei Token-Steuerungen außer der ausgefallenen Token-Steuerung gemäß den Informationen im Cluster;
wenn der Zustand im Cluster ist, dass die vom Ausfall wiederhergestellte Token-Steuerung dem Cluster wieder beitritt, nachdem die Nachricht, die die Speicherdatenbankliste umfasst, von der vom Ausfall wiederhergestellten Token-Steuerung empfangen wird, Bestimmen der Steuerungspriorität der vom Ausfall wiederhergestellten Token-Steuerung gemäß den Informationen im Cluster in der Speicherdatenbankliste;
falls die Steuerungspriorität der vom Ausfall wiederhergestellten Token-Steuerung höher als die Steuerungspriorität der gegenwärtigen Master-Token-Steuerung ist, dann Bestimmen einer Verfügbarkeit der Speicherdatenbankliste der vom Ausfall wiederhergestellten Token-Steuerung gemäß der Speicherdatenbankliste von der gegenwärtigen Master-Token-Steuerung;
falls bestimmt wird, dass die Speicherdatenbankliste der vom Ausfall wiederhergestellten Token-Steuerung eine Verfügbarkeit aufweist, dann Auswählen, dass die vom Ausfall wiederhergestellte Token-Steuerung eine neue Master-Token-Steuerung ist.

6. Verfahren nach Anspruch 5, wobei, wenn eine der mindestens einen Speicherdatenbank ausfällt, das Verfahren ferner Folgendes umfasst:
Bestimmen einer Datenbankpriorität der ausgefallenen Speicherdatenbank basierend auf den Informationen im Cluster in der Speicherdatenbankliste;
falls die Datenbankpriorität der ausgefallenen Speicherdatenbank die höchste Steuerungspriorität ist, dann Auswählen einer Speicherdatenbank, die gegenwärtig die höchste Datenbankpriorität aufweist, als eine neue Master-Speicherdatenbank aus Speicherdatenbanken außer der ausgefallenen Speicherdatenbank gemäß den Informationen im Cluster.

7. Verteiltes Speicherdatenbanksystem, umfassend:
mindestens zwei Token-Steuerungen und
mindestens eine Speicherdatenbank, wobei die Speicherdatenbank Folgendes umfasst:
ein Übertragungsmodul (11), das konfiguriert ist zum periodischen Übertragen einer Nachricht, die Knoten-Speicherdatenbankinformationen umfasst, zu den mindestens zwei Token-Steuerungen, wobei die Knoten-Speicherdatenbankinformationen einen Namen einer lokalen Speicherdatenbank und/oder eine Internet-IP-Adresse und/oder einen Anschluss und/oder eine Datenbankpriorität umfassen;
ein Empfangsmodul (12), das konfiguriert ist zum periodischen Empfangen einer Nachricht, die eine Speicherdatenbankliste umfasst, von jeweils den mindestens zwei Token-Steuerungen, wobei die Speicherdatenbankliste Informationen in einem Cluster umfasst, die gemäß mindestens einer der Knoten-Speicherdatenbankinformationen angeordnet sind, wobei die Informationen im Cluster die Knoten-Speicherdatenbankinformationen jeder Speicherdatenbank, die den Cluster bildet,
und/oder Master-Slave-Modusinformationen jeder Speicherdatenbank, die den Cluster bildet, und/oder eine Steuerungspriorität einer Token-Steuerung, die die Speicherdatenbankliste überträgt, umfassen;
ein Verarbeitungsmodul (13), das konfiguriert ist zum Verarbeiten einer Transaktion im Cluster gemäß den Informationen im Cluster in der Speicherdatenbankliste, wobei das Verarbeiten von Transaktionen im Cluster auf den Informationen im Cluster in der Speicherdatenbankliste von einer Master-Token-Steuerung basiert, wenn die Nachricht, die die Speicherdatenbankliste umfasst, von der Master-Token-Steuerung der mindestens zwei Token-Steuerungen empfangen wird;
wobei das Verarbeitungsmodul (13) Folgendes umfasst:
eine Ausfallbestimmungseinheit (131), die konfiguriert ist zum Bestimmen einer Steuerungspriorität einer ausgefallenen Token-Steuerung gemäß den Informationen im Cluster in der Speicherdatenbankliste, wenn eine Token-Steuerung ausfällt;
eine erste Auswahleinheit (132), die konfiguriert ist zum Auswählen, dass eine Token-Steuerung, die gegenwärtig die höchste Steuerungspriorität aufweist, eine Master-Token-Steuerung ist, aus Token-Steuerungen außer der ausgefallenen Token-Steuerung gemäß den Informationen im Cluster, wenn die Ausfallbestimmungseinheit (131) bestimmt, dass die Steuerungspriorität der ausgefallenen Token-Steuerung die höchste Steuerungspriorität ist;
eine Wiederherstellungsbestimmungseinheit (134), die konfiguriert ist zum Bestimmen einer Steuerungspriorität einer vom Ausfall wiederhergestellten Token-Steuerung gemäß den Informationen im Cluster in der Speicherdatenbankliste, die durch das Empfangsmodul von der vom Ausfall wiederhergestellten Token-Steuerung empfangen wird, wenn die vom Ausfall wiederhergestellte Token-Steuerung dem Cluster wieder beitritt;
eine Verfügbarkeitsbestimmungseinheit (135), die konfiguriert ist zum Bestimmen einer Verfügbarkeit der Speicherdatenbankliste der vom Ausfall wiederhergestellten Token-Steuerung gemäß der Speicherdatenbankliste von der gegenwärtigen Token-Steuerung, wenn die Wiederherstellungsbestimmungseinheit (134) bestimmt, dass die Steuerungspriorität der vom Ausfall wiederhergestellten Token-Steuerung höher als die Steuerungspriorität der gegenwärtigen Master-Token-Steuerung ist;
eine zweite Auswahleinheit (136), die konfiguriert ist zum Auswählen, dass die vom Ausfall wiederhergestellte Token-Steuerung eine neue Master-Token-Steuerung ist, wenn die Verfügbarkeitsbestimmungseinheit (135) bestimmt, dass die Speicherdatenbankliste der vom Ausfall wiederhergestellten Token-Steuerung eine Verfügbarkeit aufweist.

8. System nach Anspruch 7, wobei jede der Token-Steuerungen Folgendes umfasst:
ein Empfangsmodul (21), das konfiguriert ist zum periodischen Empfangen einer Nachricht, die Knoten-Speicherdateninformationen umfasst, von mindestens einer Speicherdatenbank, wobei die Knoten-Speicherdatenbankinformationen einen Namen einer lokalen Speicherdatenbank und/oder eine Internet-IP-Adresse und/oder einen Anschluss und/oder eine Datenbankpriorität umfassen;
ein Erfassungsmodul (22), das konfiguriert ist zum Erfassen einer Speicherdatenbankliste gemäß den Knoten-Speicherdatenbankinformationen, wobei die Speicherdatenbankliste Informationen in einem Cluster umfasst, die gemäß mindestens einer der Knoten-Speicherdatenbankinformationen angeordnet sind, wobei die Informationen im Cluster die Knoten-Speicherdatenbankinformationen jeder Speicherdatenbank, die den Cluster bildet, und/oder Master-Slave-Modusinformationen jeder Speicherdatenbank, die den Cluster bildet, und/oder eine Steuerungspriorität der Token-Steuerung, die die Speicherdatenbankliste erfasst, umfassen;
ein Übertragungsmodul (23), das konfiguriert ist zum periodischen Übertragen einer Nachricht, die die Speicherdatenbankliste umfasst, zu der mindestens einen Speicherdatenbank, so dass die mindestens eine Speicherdatenbank eine Transaktion im Cluster gemäß den Informationen im Cluster in der Speicherdatenbankliste verarbeitet.

9. System nach Anspruch 8, wobei jede der Token-Steuerungen ferner Folgendes umfasst:
eine Wiederherstellungsbestimmungseinheit (26), die konfiguriert ist zum Bestimmen der Datenbankpriorität der vom Ausfall wiederhergestellten Speicherdatenbank gemäß den Knoten-Speicherdatenbankinformationen der vom Ausfall wiederhergestellten Speicherdatenbank, nachdem die vom Ausfall wiederhergestellte Speicherdatenbank die Nachricht, die die Knoten-Speicherdatenbankinformationen umfasst, empfängt;
eine zweite Auswahleinheit (27), die konfiguriert ist zum Auswählen, dass die vom Ausfall wiederhergestellte Speicherdatenbank eine neue Master-Speicherdatenbank ist, nachdem die gegenwärtige Master-Speicherdatenbank aus einem Master-Speicherdatenbank-Modus austritt, wenn die Wiederherstellungsbestimmungseinheit (26) bestimmt, dass die Datenbankpriorität der vom Ausfall wiederhergestellten Speicherdatenbank höher als die Datenbankpriorität der gegenwärtigen Master-Speicherdatenbank ist.

10. System nach Anspruch 8, wobei jede der Token-Steuerungen ferner Folgendes umfasst:
eine Ausfallbestimmungseinheit (24), die konfiguriert ist zum Bestimmen einer Datenbankpriorität einer ausgefallenen Speicherdatenbank gemäß den Informationen im Cluster in der Speicherdatenbankliste, wenn eine Speicherdatenbank der mindestens einen Speicherdatenbank ausfällt;
eine erste Auswahleinheit (25), die konfiguriert ist zum Auswählen, dass eine Speicherdatenbank, die gegenwärtig die höchste Datenbankpriorität aufweist, eine neue Master-Speicherdatenbank ist, aus Speicherdatenbanken außer der ausgefallenen Speicherdatenbank gemäß den Informationen im Cluster, wenn die Ausfallbestimmungseinheit (24) bestimmt, dass die Datenbankpriorität der ausgefallenen Speicherdatenbank die höchste Steuerungspriorität ist.

## Revendications

1. Procédé permettant de mettre en oeuvre une base de données en mémoire distribuée, comprenant les étapes suivantes exécutées par une base de données en mémoire à l'intérieur d'un cluster :
transmettre périodiquement (101) un message comportant des informations de base de données en mémoire de noeud à au moins deux contrôleurs de jeton qui sont chargés de gérer le cluster, les informations de base de données en mémoire de noeud comportant un ou plusieurs éléments parmi un nom d'une base de données en mémoire locale, une adresse IP Internet, une priorité de port et de base de données ;
recevoir périodiquement (102) un message comportant une liste de bases de données en mémoire respectivement à partir des au moins deux contrôleurs de jeton, la liste de bases de données en mémoire comprenant des informations à l'intérieur du cluster agencées selon au moins un élément parmi les informations de base de données en mémoire de noeud, les informations à l'intérieur du cluster comprenant un ou plusieurs éléments parmi les informations de base de données en mémoire de noeud de chaque base de données en mémoire qui constitue le cluster, des informations de mode maître/esclave de chaque base de données en mémoire qui constitue le cluster, et une priorité de contrôleur d'un contrôleur de jeton qui transmet la liste de bases de données en mémoire ; et
traiter (103) des transactions à l'intérieur du cluster selon les informations à l'intérieur du cluster dans la liste de bases de données en mémoire ;
l'étape consistant à traiter (103) des transactions à l'intérieur du cluster selon les informations à l'intérieur du cluster dans la liste de bases de données en mémoire comprenant : traiter (103) des transactions à l'intérieur du cluster sur la base des informations à l'intérieur du cluster dans la liste de bases de données en mémoire à partir d'un contrôleur de jeton maître lorsque le message comprenant la liste de bases de données en mémoire est reçu à partir du contrôleur de jeton maître des au moins deux contrôleurs de jeton ;
lorsque la base de données en mémoire est une base de données en mémoire maîtresse, et que la situation à l'intérieur du cluster est qu'un contrôleur de jeton des au moins deux contrôleurs de jeton est défaillant, l'étape consistant à traiter (103) des transactions à l'intérieur du cluster selon les informations à l'intérieur du cluster dans la liste de bases de données en mémoire comprend :
déterminer (601) une priorité de contrôleur du contrôleur de jeton défaillant selon les informations à l'intérieur du cluster dans la liste de bases de données en mémoire ;
si la priorité de contrôleur du contrôleur de jeton défaillant est la priorité de contrôleur la plus élevée (602), sélectionner alors (603) un contrôleur de jeton ayant actuellement la priorité de contrôleur la plus élevée comme contrôleur de jeton maître parmi des contrôleurs de jeton autres que le contrôleur de jeton défaillant selon les informations à l'intérieur du cluster ; et
lorsque la base de données en mémoire est la base de données en mémoire maîtresse, et lorsque le contrôleur de jeton ayant récupéré de sa panne rejoint le cluster, l'étape consistant à traiter (103) des transactions à l'intérieur du cluster selon les informations à l'intérieur du cluster dans la liste de bases de données en mémoire comprend :
après que le message comportant la liste de bases de données en mémoire obtenue à partir du contrôleur de jeton ayant récupéré de sa panne a été reçu, déterminer (701) la priorité de contrôleur du contrôleur de jeton ayant récupéré de sa panne selon les informations à l'intérieur du cluster dans la liste de bases de données en mémoire ;
si la priorité de contrôleur du contrôleur de jeton ayant récupéré de sa panne est supérieure à la priorité de contrôleur du contrôleur de jeton maître courant (702),
déterminer (703) alors une disponibilité de la liste de bases de données en mémoire du contrôleur de jeton ayant récupéré de sa panne selon la liste de bases de données en mémoire obtenue à partir du contrôleur de jeton maître courant ;
s'il est déterminé que la liste de bases de données en mémoire du contrôleur de jeton ayant récupéré de sa panne a une disponibilité (703), sélectionner (704) alors le contrôleur de jeton ayant récupéré de sa panne comme un nouveau contrôleur de jeton maître.

2. Procédé selon la revendication 1 dans lequel, lorsque la base de données en mémoire est une base de données en mémoire ayant une priorité de base de données supérieure à celle d'une base de données en mémoire maîtresse, et lorsque la base de données en mémoire supérieure rejoint le cluster, l'étape consistant à traiter (103) des transactions à l'intérieur du cluster selon les informations à l'intérieur du cluster dans la liste de bases de données en mémoire comprend alors :
transmettre (1002) une requête de mise à jour de données à la base de données en mémoire maîtresse selon les informations à l'intérieur du cluster dans la liste de bases de données en mémoire, et la requête de mise à jour de données comprend un numéro de série d'opération des informations de données finalement enregistrées dans la base de données en mémoire supérieure, afin que la base de données en mémoire maîtresse retourne les informations de données du numéro de série d'opération successif ;
mettre à jour (1004) une base de données en mémoire locale de la base de données en mémoire supérieure selon les informations de données retournées du numéro de série d'opération successif, et transmettre une réponse mise à jour terminée à la base de données en mémoire maîtresse, afin que la base de données en mémoire maîtresse exécute un processus consistant à faire exister un mode de base de données en mémoire maîtresse.

3. Procédé selon la revendication 1, comprenant en outre :
transmettre (1001) le message comportant les informations de base de données en mémoire de noeud à un contrôleur de jeton d'un premier site ;
acquérir (1405) une liste de bases de données en mémoire du premier site à partir du contrôleur de jeton du premier site, la liste de bases de données en mémoire comportant des informations de base de données en mémoire maîtresse d'un deuxième site qui rejoint le premier site comme une base de données en mémoire esclave, et des informations à l'intérieur d'un cluster du premier site agencées selon au moins un élément des informations de base de données en mémoire de noeud ;
traiter (1405) une transaction entre les sites selon la liste de bases de données en mémoire ; et
lorsqu'une requête d'opération en écriture est reçue, l'étape consistant à traiter (1405) une transaction entre les sites selon la liste de bases de données en mémoire comprenant alors :
mettre à jour (1502) les informations de données des bases de données en mémoire esclaves respectives selon la requête d'opération en écriture, les bases de données en mémoire esclaves respectives comprenant : une base de données en mémoire esclave dans le premier site acquise selon les informations à l'intérieur du cluster, et une base de données en mémoire maîtresse dans le deuxième site acquise selon les informations de base de données en mémoire maîtresse ;
après que la base de données en mémoire maîtresse du deuxième site a mis à jour les informations de données selon la requête d'opération en écriture, mettre à jour (1503) les informations de données de la base de données en mémoire esclave du deuxième site selon la requête d'opération en écriture.

4. Procédé selon la revendication 3 dans lequel, lorsque la requête d'opération en écriture est reçue, le procédé comprend en outre : ajouter un numéro de série d'opération à la requête d'opération en écriture reçue ;
l'étape consistant à mettre à jour (1502) les informations de données des bases de données en mémoire esclaves respectives selon la requête d'opération en écriture comprend :
mettre à jour les informations de données des bases de données en mémoire esclaves respectives selon la requête d'opération en écriture, la requête d'opération en écriture contenant un nom de site global du site auquel l'opération en écriture appartient et le numéro de série d'opération de la requête d'opération en écriture, afin que les bases de données en mémoire esclaves respectives enregistrent le numéro de série d'opération de la requête d'opération en écriture selon le nom de site global.

5. Procédé permettant de mettre en oeuvre une base de données en mémoire distribuée, comprenant les étapes suivantes exécutées par un contrôleur de jeton qui est chargé de gérer un cluster :
recevoir périodiquement un message comportant des informations de données en mémoire de noeud à partir d'au moins une base de données en mémoire à l'intérieur du cluster, les informations de base de données en mémoire de noeud comportant un ou plusieurs éléments parmi un nom d'une base de données en mémoire locale, une adresse IP Internet, une priorité de port et de base de données ;
acquérir une liste de bases de données en mémoire selon les informations de base de données en mémoire de noeud, la liste de bases de données en mémoire comportant des informations à l'intérieur d'un cluster agencées selon au moins un élément parmi les informations de base de données en mémoire de noeud, les informations à l'intérieur du cluster comportant un ou plusieurs éléments parmi les informations de base de données en mémoire de noeud de chaque base de données en mémoire qui constitue le cluster, des informations de mode maître/esclave de chaque base de données en mémoire qui constitue le cluster, et une priorité de contrôleur du contrôleur de jeton qui acquiert la liste de bases de données en mémoire ;
transmettre périodiquement le message comprenant la liste de bases de données en mémoire à l'au moins une base de données en mémoire, afin que l'au moins une base de données en mémoire traite une transaction à l'intérieur du cluster selon les informations à l'intérieur du cluster dans la liste de bases de données en mémoire ;
l'étape consistant à traiter une transaction à l'intérieur du cluster selon les informations à l'intérieur du cluster dans la liste de bases de données en mémoire comprenant :
traiter des transactions à l'intérieur du cluster sur la base des informations à l'intérieur du cluster dans la liste de bases de données en mémoire à partir d'un contrôleur de jeton maître d'au moins deux contrôleurs de jeton lorsque le message reçu comprenant la liste de bases de données en mémoire provient du contrôleur de jeton maître ; et
lorsque la situation à l'intérieur du cluster est qu'un contrôleur de jeton des au moins deux contrôleurs de jeton est défaillant, déterminer une priorité de contrôleur du contrôleur de jeton défaillant selon les informations à l'intérieur du cluster dans la liste de bases de données en mémoire ; si la priorité de contrôleur du contrôleur de jeton défaillant est la priorité de contrôleur la plus élevée, sélectionner alors un contrôleur de jeton ayant actuellement la priorité de contrôleur la plus élevée comme contrôleur de jeton maître parmi les au moins deux contrôleurs de jeton autres que le contrôleur de jeton défaillant selon les informations à l'intérieur du cluster ;
lorsque la situation à l'intérieur du cluster est que le contrôleur de jeton qui a récupéré de sa panne rejoint le cluster, après que le message comportant la liste de bases de données en mémoire obtenue à partir du contrôleur de jeton ayant récupéré de sa panne a été reçu, déterminer la priorité de contrôleur du contrôleur de jeton ayant récupéré de sa panne selon les informations à l'intérieur du cluster dans la liste de bases de données en mémoire ;
si la priorité de contrôleur du contrôleur de jeton ayant récupéré de sa panne est supérieure à la priorité de contrôleur du contrôleur de jeton maître courant, déterminer alors une disponibilité de la liste de bases de données en mémoire du contrôleur de jeton ayant récupéré de sa panne selon la liste de bases de données en mémoire obtenue à partir du contrôleur de jeton maître courant ;
s'il est déterminé que la liste de bases de données en mémoire du contrôleur de jeton ayant récupéré de sa panne a une disponibilité, sélectionner alors le contrôleur de jeton ayant récupéré de sa panne comme un nouveau contrôleur de jeton maître.

6. Procédé selon la revendication 5 dans lequel, lorsqu'une de l'au moins une base de données en mémoire est défaillante, le procédé comprend en outre :
déterminer une priorité de base de données de la base de données en mémoire défaillante sur la base des informations à l'intérieur du cluster dans la liste de bases de données en mémoire ;
si la priorité de base de données de la base de données en mémoire défaillante est la priorité de contrôleur la plus élevée, sélectionner alors une base de données en mémoire ayant actuellement la priorité de base de données la plus élevée comme une nouvelle base de données en mémoire maîtresse parmi des bases de données en mémoire autres que la base de données en mémoire défaillante selon les informations à l'intérieur du cluster.

7. Système de base de données en mémoire distribuée, comprenant :
au moins deux contrôleurs de jeton ; et
au moins une base de données en mémoire, la base de données en mémoire comprenant :
un module de transmission (11), configuré pour transmettre périodiquement un message comportant des informations de base de données en mémoire de noeud aux au moins deux contrôleurs de jeton, les informations de base de données en mémoire de noeud comprenant un ou plusieurs éléments parmi un nom d'une base de données en mémoire locale, une adresse IP Internet, une priorité de port et de base de données ;
un module de réception (12), configuré pour recevoir périodiquement un message comprenant une liste de bases de données en mémoire respectivement à partir des au moins deux contrôleurs de jeton, la liste de bases de données en mémoire comportant des informations à l'intérieur d'un cluster agencées selon au moins un élément parmi les informations de base de données en mémoire de noeud, les informations à l'intérieur du cluster comprenant un ou plusieurs éléments parmi les informations de base de données en mémoire de noeud de chaque base de données en mémoire qui constitue le cluster, des informations de mode maître/esclave de chaque base de données en mémoire qui constitue le cluster, et une priorité de contrôleur d'un contrôleur de jeton qui transmet la liste de bases de données en mémoire ;
un module de traitement (13), configuré pour traiter une transaction à l'intérieur du cluster selon les informations à l'intérieur du cluster dans la liste de bases de données en mémoire, l'étape consistant à traiter des transactions à l'intérieur du cluster étant basée sur les informations à l'intérieur du cluster dans la liste de bases de données en mémoire à partir d'un contrôleur de jeton maître lorsque le message comprenant la liste de bases de données en mémoire est reçu à partir du contrôleur de jeton maître des au moins deux contrôleurs de jeton ;
le module de traitement (13) comprenant :
une unité de détermination de panne (131), configurée pour déterminer une priorité de contrôleur d'un contrôleur de jeton défaillant selon les informations à l'intérieur du cluster dans la liste de bases de données en mémoire lorsqu'un contrôleur de jeton est défaillant ;
une première unité de sélection (132), configurée pour sélectionner un contrôleur de jeton ayant actuellement la priorité de contrôleur la plus élevée comme contrôleur de jeton maître parmi des contrôleurs de jeton autres que le contrôleur de jeton défaillant selon les informations à l'intérieur du cluster lorsque l'unité de détermination de panne (131) détermine que la priorité de contrôleur du contrôleur de jeton défaillant est la priorité de contrôleur la plus élevée ;
une unité de détermination de récupération (134), configurée pour déterminer une priorité de contrôleur d'un contrôleur de jeton ayant récupéré de sa panne selon les informations à l'intérieur du cluster dans la liste de bases de données en mémoire reçue par le module de réception à partir du contrôleur de jeton ayant récupéré de sa panne lorsque le contrôleur de jeton ayant récupéré de sa panne rejoint le cluster ;
une unité de détermination de disponibilité (135), configurée pour déterminer une disponibilité de la liste de bases de données en mémoire du contrôleur de jeton ayant récupéré de sa panne selon la liste de bases de données en mémoire obtenue à partir du contrôleur de jeton actuel lorsque l'unité de détermination de récupération (134) détermine que la priorité de contrôleur du contrôleur de jeton ayant récupéré de sa panne est supérieure à la priorité de contrôleur du contrôleur de jeton maître courant ;
une deuxième unité de sélection (136), configurée pour sélectionner le contrôleur de jeton ayant récupéré de sa panne comme un nouveau contrôleur de jeton maître lorsque l'unité de détermination de disponibilité (135) détermine que la liste de bases de données en mémoire du contrôleur de jeton ayant récupéré de sa panne a une disponibilité.

8. Système selon la revendication 7, dans lequel chacun des contrôleurs de jeton comprend :
un module de réception (21), configuré pour recevoir périodiquement un message comportant des informations de base de données en mémoire de noeud à partir d'au moins une base de données en mémoire, les informations de base de données en mémoire de noeud comportant un ou plusieurs éléments parmi un nom d'une base de données en mémoire locale, une adresse IP Internet, une priorité de port et de base de données ;
un module d'acquisition (22), configuré pour acquérir une liste de bases de données en mémoire selon les informations de base de données en mémoire de noeud, la liste de bases de données en mémoire comportant des informations à l'intérieur d'un cluster agencées selon au moins un élément parmi les informations de base de données en mémoire de noeud, les informations à l'intérieur du cluster comprenant un ou plusieurs éléments parmi les informations de base de données en mémoire de noeud de chaque base de données en mémoire qui constitue le cluster, des informations de mode maître/esclave de chaque base de données en mémoire qui constitue le cluster, et une priorité de contrôleur du contrôleur de jeton qui acquiert la liste de bases de données en mémoire ;
un module de transmission (23), configuré pour transmettre périodiquement un message comprenant la liste de bases de données en mémoire à l'au moins une base de données, afin que l'au moins une base de données en mémoire traite une transaction à l'intérieur du cluster selon les informations à l'intérieur du cluster dans la liste de bases de données en mémoire.

9. Système selon la revendication 8, dans lequel chacun des contrôleurs de jeton comprend en outre :
une unité de détermination de récupération (26), configurée pour déterminer la priorité de base de données de la base de données en mémoire ayant récupéré de sa panne selon les informations de base de données en mémoire de noeud de la base de données en mémoire ayant récupéré de sa panne après que la base de données en mémoire ayant récupéré de sa panne a reçu le message comportant les informations de base de données en mémoire de noeud ;
une deuxième unité de sélection (27), configurée pour sélectionner la base de données en mémoire ayant récupéré de sa panne comme une nouvelle base de données en mémoire maîtresse après que la base de données en mémoire maîtresse actuelle est sortie d'un mode de base de données en mémoire maîtresse, lorsque l'unité de détermination de récupération (26) détermine que la priorité de base de données de la base de données en mémoire ayant récupéré de sa panne est supérieure à la priorité de base de données de la base de données en mémoire maîtresse actuelle.

10. Système selon la revendication 8, dans lequel chacun des contrôleurs de jeton comprend en outre :
une unité de détermination de panne (24), configurée pour déterminer une priorité de base de données d'une base de données en mémoire défaillante selon les informations à l'intérieur du cluster dans la liste de bases de données en mémoire lorsqu'une base de données en mémoire de l'au moins une base de données en mémoire est défaillante ;
une première unité de sélection (25), configurée pour sélectionner une base de données en mémoire ayant actuellement la priorité de base de données la plus élevée comme une nouvelle base de données en mémoire maîtresse parmi des bases de données en mémoire autres que la base de données en mémoire défaillante selon les informations à l'intérieur du cluster lorsque l'unité de détermination de panne (24) détermine que la priorité de base de données de la base de données en mémoire défaillante est la priorité de contrôleur la plus élevée.
